# EUROPEAN PATENT SPECIFICATION

(11) **EP 2 678 639 B1**
(45) Date of publication and mention of the grant of the patent: **07.06.2017**
(21) Application number: 12705030.0
(22) Date of filing: 10.02.2012
(51) Int. Cl.: G01D 5/244

(54) **CIRCUITS AND METHODS FOR MOTION DETECTION**
SCHALTUNGEN UND VERFAHREN ZUR BEWEGUNGSDETEKTION
CIRCUITS ET PROCÉDÉS DE DÉTECTION DE MOUVEMENT

(30) Priority: 31.03.2011 US 201113077127
(43) Date of publication of application: 01.01.2014
(73) Proprietor: Allegro Microsystems, LLC, Worcester, Massachusetts 01606 (US)
(72) Inventor: FRIEDRICH, Andreas, P., 74370 Metz-Tessy (FR); FOLETTO, Andrea, 74000 Annecy (FR); VIG, Ravi, Bow, NH 03304 (US)
(74) Representative: South, Nicholas Geoffrey
(86) International application number: PCT/US2012/024583
(87) International publication number: WO 2012/134644

(56) References cited:
- WO-A1-99/42789
- DE-A1- 3 115 237
- US-A1- 2005 225 319
- US-A1- 2011 048 102
- US-B1- 7 138 793

## Description

### FIELD OF THE INVENTION

This invention relates generally to integrated circuits and, more particularly, to integrated circuits for detecting a movement of a ferromagnetic object.

### BACKGROUND

Magnetic field sensors (e.g., rotation detectors) for detecting ferromagnetic articles and/or magnetic articles are known. The magnetic field associated with the ferromagnetic article or magnetic article is detected by a magnetic field sensing element, such as a Hall element or a magnetoresistance element, which provides a signal (i.e., a magnetic field signal) proportional to a detected magnetic field. In some arrangements, the magnetic field signal is an electrical signal.

The magnetic field sensor processes the magnetic field signal to generate an output signal that changes state each time the magnetic field signal crosses thresholds, either near to peaks (positive and/or negative peaks) or near to some other level, for example, zero crossings of the magnetic field signal. Therefore, the output signal has an edge rate or period indicative of a movement speed (e.g., a rotation speed) of the ferromagnetic or magnetic object, for example, a gear or a ring magnet.

One application for a magnetic field sensor is to detect the approach and retreat of each tooth of a rotating ferromagnetic gear, either a hard magnetic gear or a soft ferromagnetic gear. In some particular arrangements, a ring magnet having magnetic regions (including permanent or hard magnetic material) with alternating polarity is coupled to the ferromagnetic gear or is used by itself. The magnetic field sensor is responsive to approach and retreat of the magnetic regions of the ring magnet. In other arrangements, a gear is disposed proximate to a stationary magnet and the magnetic field sensor is responsive to perturbations of a magnetic field as the gear rotates.

In one type of magnetic field sensor, sometimes referred to as a peak-to-peak percentage detector (or threshold detector), one or more threshold levels are equal to respective percentages of the peak-to-peak magnetic field signal. One such peak-to-peak percentage detector is described in U.S. Patent No. 5,917,320 entitled "Detection of Passing Magnetic Articles While Periodically Adapting Detection Threshold" and assigned to the assignee of the present invention.

Another type of magnetic field sensor, sometimes referred to as a slope-activated detector (or peak referenced detector), is described in U.S. Patent No. 6,091,239 entitled "Detection Of Passing Magnetic Articles With a Peak Referenced Threshold Detector," also assigned to the assignee of the present invention. In the peak referenced magnetic field sensor, the threshold signal differs from the positive and negative peaks (i.e., the peaks and valleys) of the magnetic field signal by a predetermined amount. Thus, in this type of magnetic field sensor, the output signal changes state when the magnetic field signal comes away from a peak or valley of the magnetic field signal by the predetermined amount.

It should be understood that, because the above-described threshold detector and the above-described peak referenced detector both have circuitry that can identify the positive and negative peaks of a magnetic field signal, the threshold detector and the peak referenced detector both include a circuit portion, which is configured to detect positive peaks and/or negative peaks of the magnetic field signal. The threshold detector and the peak referenced detector, however, each use the detected peaks in different ways.

In order to accurately detect the positive and negative peaks of a magnetic field signal, the rotation detector is capable of tracking at least part of the magnetic field signal. To this end, typically, one or more digital-to-analog converters (DACs) can be used to generate a tracking signal, which tracks the magnetic field signal. For example, in the above-referenced U.S. Patent Nos. 5,917,320 and 6,091,239, two DACs are used, one (PDAC) to detect the positive peaks of the magnetic field signal and the other (NDAC) to detect the negative peaks of the magnetic field signal.

Some types of rotation detectors perform one or more types of initialization or calibration, for example, at a time near to start up or power up of the rotation detector, or otherwise, from time to time as desired. During one type of calibration, the above-described threshold level is determined. In some types of calibration, a time interval during which the calibration occurs is determined in accordance with a predetermined number of cycles of the magnetic field signal. Thus, for fast magnetic field signals (e.g., for fast rotating gears), the time available for calibration is small. In those applications for which the movement or rotation is rapid and the time available for calibration is small, the rotation detector might not provide accurate motion detection fast enough.

It would, therefore, be desirable to provide a movement detector (e.g., a rotation detector) that can provide accurate and reliable motion detection (rotation speed and/or rotation direction) within a relatively short time frame, as well as over relatively long time frames.

### SUMMARY

In general overview, the invention is directed to aspects of a circuit capable of detecting movement of an object within a relatively short period of time and, in some embodiments, detecting a speed and/or a direction of movement of an object within a relatively short period of time. The circuit detects object movement using one or more predetermined threshold detectors based on a predetermined threshold of a magnetic field signal associated with a magnetic field of an object. The circuit also detects object movement using one or more tracking threshold detectors by tracking the magnetic field signal over time. The predetermined threshold detectors can detect object movement quickly in comparison to the tracking threshold detectors, which require a calibration period (for example, a period which may include a period from startup or power up of a circuit) to track positive and negative peaks of the magnetic field signal. The circuit includes an output selector to generate an output related to the output of one of the predetermined threshold detectors or the tracking threshold detectors based on a predetermined condition. In some embodiments, the predetermined condition is related to a number of cycles of a magnetic field signal or the calibration time period of the tracking threshold detectors.

In some embodiments, a circuit capable of detecting a speed and a direction of a moving object includes a pair of predetermined threshold detectors responsive to a first pair of magnetic field elements (operative to provide a first magnetic field signal) and a second pair of magnetic field elements (operative to provide a second magnetic field signal). The first and second magnetic field signals are proportional to responses of the first and second pairs of magnetic field elements. The circuit also includes a pair of tracking threshold detectors responsive to the first and second magnetic field signals. The output selector generates an output signal related to a combination of output signals generated by the pair of predetermined threshold detectors and the pair of tracking threshold detectors based on the predetermined condition.

The circuit may be used in applications in which it is desired, needed, or necessary to detect object movement quickly and to generate an output signal indicative of such object movement. The object is not limited to any particular type of object which may include, but is not limited to, a toothed gear, crankshaft, camshaft, mechanical component of a toy or tool, etc. The object may include a ferromagnetic object, such as a soft ferromagnetic object. By way of non-limiting examples, the circuit may be used to detect movement of gears in a vehicle (for example, direction of rotation of transmission gears during vehicle operation), movement of vehicle wheels (for example, to generate an output signal indicative of forward or backward movement of a vehicle), etc.

In accordance with one aspect of the invention, a circuit responsive to movement of an object includes a magnetic field sensing element operative to provide a magnetic field signal proportional to a magnetic field associated with the object, a predetermined threshold detector including a comparator having a first input responsive to the magnetic field signal, a second input responsive to a predetermined threshold, and an output at which is provided a predetermined threshold detector output signal, and a tracking threshold detector including a tracking circuit coupled to receive the magnetic field signal and configured to track positive and negative peaks of the magnetic field signal and to generate a tracking signal, and a comparator having a first input responsive to the magnetic field signal, a second input responsive to an input signal related to the tracking signal, and an output at which is provided a tracking threshold detector output signal. The circuit also includes an output signal selector having a first input responsive to the tracking threshold detector output signal, a second input responsive to the predetermined threshold detector output signal, and configured to generate a circuit output signal related to at least one of the predetermined threshold detector output signal or the tracking threshold detector output signal based upon a predetermined condition.

In further embodiments, the circuit includes one or more of the following features: the predetermined condition is related to a predetermined number of cycles of the magnetic field signal; the predetermined condition is related to a predetermined number of cycles of the predetermined threshold detector output signal; the predetermined condition corresponds to a predetermined time; at least one of an automatic gain control coupled to the magnetic field sensing element and configured to process the magnetic field signal, wherein the predetermined condition corresponds to a condition of the automatic gain control, or an automatic offset adjustment coupled to the magnetic field sensing element and configured to process the magnetic field signal, wherein the predetermined condition corresponds to a condition of the automatic offset adjustment, and; the output signal selector is further configured to generate the circuit output signal related to the predetermined threshold detector output signal during a calibration time period of the tracking threshold detector and to generate the circuit output signal related to the tracking threshold detector output signal after the calibration time period wherein the predetermined condition corresponds to the end of the calibration time period.

In another embodiment, the circuit includes one or more of the following features: the magnetic field sensing element is a first pair of magnetic field sensing elements, the magnetic field signal is a first magnetic field signal, and the predetermined threshold detector is a first predetermined threshold detector responsive to the first magnetic field signal and operative to provide a first predetermined threshold detector output signal having a first predetermined threshold detector phase, the circuit further including a second pair of magnetic field sensing elements operative to provide a second magnetic field signal, and a second predetermined threshold detector including a comparator having a first input responsive to the second magnetic field signal, a second input responsive to the predetermined threshold, and an output at which is provided a second predetermined threshold detector output signal having a second predetermined threshold detector phase, wherein the signal selector further includes a third input responsive to the second predetermined threshold detector output signal and a difference between the first and second predetermined threshold detector phases is indicative of a movement direction of the object; the predetermined condition is related to a predetermined number of cycles of one of the first or second magnetic field signals; the predetermined condition is related to a predetermined number of cycles of one of the first or second predetermined threshold detector output signals; the predetermined condition corresponds to a predetermined time, and; at least one of an automatic gain control coupled to one of the first pair or the second pair of magnetic field sensing elements and configured to process a corresponding one of the first or second magnetic field signals, wherein the predetermined condition corresponds to a condition of the automatic gain control, or an automatic offset adjustment coupled to one of the first pair or the second pair of magnetic field sensing elements and configured to process a corresponding one of the first or second magnetic field signals, wherein the predetermined condition corresponds to a condition of the automatic gain control.

In a further embodiment, the circuit includes one or more of the following features: the magnetic field sensing element is a first pair of magnetic field sensing elements and the magnetic field signal is a first magnetic field signal, and the tracking threshold detector is a first tracking threshold detector responsive to the first magnetic field signal and operative to provide a first tracking threshold detector output signal having a frequency indicative of movement speed of the object and a first tracking threshold detector phase, the circuit further including a second pair of magnetic field sensing elements operative to provide a second magnetic field signal, and a second tracking threshold detector including a tracking circuit coupled to receive the second magnetic field signal and configured to track positive and negative peaks of the second magnetic field signal and to generate a second tracking signal and a comparator having a first input responsive to the second magnetic field signal, a second input responsive to an input signal related to the second tracking signal, and an output at which is provided a second tracking threshold detector output signal having a second tracking threshold detector phase wherein the signal selector further includes a third input responsive to the second tracking threshold detector output signal and a difference between the first and second tracking threshold detector phases is indicative of a movement direction of the object; the predetermined condition is related to a predetermined number of cycles of one of the first or second magnetic field signals; the predetermined condition is related to a predetermined number of cycles of one of the first or second tracking threshold detector output signals; the predetermined condition corresponds to a predetermined time; at least one of an automatic gain control coupled to one of the first pair or the second pair of magnetic field sensing elements and configured to process a corresponding one of the first or second magnetic field signals, wherein the predetermined condition corresponds to a condition of the automatic gain control, or an automatic offset adjustment coupled to one of the first pair or the second pair of magnetic field sensing elements and configured to process a corresponding one of the first or second magnetic field signals, wherein the predetermined condition corresponds to a condition of the automatic offset adjustment; the predetermined threshold detector is a first predetermined threshold detector responsive to the first magnetic field signal and the first predetermined threshold detector comparator is responsive to a first predetermined threshold and is operative to provide a first predetermined threshold detector output signal having a frequency indicative of movement speed of the object and a first predetermined threshold detector phase, the circuit further including a second predetermined threshold detector including a second comparator circuit having an input responsive to the second magnetic field signal and another input responsive to a second predetermined threshold and operative to provide a second predetermined threshold detector output signal having a second predetermined threshold detector phase wherein the signal selector further comprises a fourth input responsive to the second predetermined threshold detector output signal and a difference between the first and second predetermined threshold detector phases is indicative of a movement direction of the object; at least one of the first or second predetermined threshold detectors includes a Schmitt trigger; the output signal selector further includes a third input responsive to the second tracking threshold detector output signal and a fourth input responsive to the second predetermined threshold detector output signal and is further configured to provide the circuit output signal corresponding to a combination of the first and second tracking threshold detector output signals or a combination of the first and second predetermined threshold detector output signals based upon the predetermined condition; the predetermined condition is related to a predetermined number of cycles of one of the first or second magnetic field signals; the predetermined condition is related to a predetermined number of cycles of one of the first predetermined threshold detector output signal, second predetermined threshold detector output signal, first tracking threshold detector output signal, or second tracking threshold detector output signal; the predetermined condition corresponds to a predetermined time, and; at least one of an automatic gain control coupled to one of the first pair or the second pair of magnetic field sensing elements and configured to process a corresponding one of the first or second magnetic field signals, wherein the predetermined condition corresponds to a condition of the automatic gain control, or an automatic offset adjustment coupled to one of the first pair or the second pair of magnetic field sensing elements and configured to process a corresponding one of the first or second magnetic field signals, wherein the predetermined condition corresponds to a condition of the automatic offset adjustment.

In accordance with another aspect of the invention, a circuit responsive to movement of an object includes a first pair of magnetic field sensing elements operative to provide a first magnetic field signal proportional to a magnetic field associated with the object, a second pair of magnetic field sensing elements operative to provide a second magnetic field signal proportional to the magnetic field, a first predetermined threshold detector including a first comparator circuit having an input responsive to the first magnetic field signal and another input responsive to a first predetermined threshold and an output at which is provided a first predetermined threshold detector output signal having a frequency indicative of movement speed of the object and a first predetermined threshold detector phase, a second predetermined threshold detector including a second comparator circuit having an input responsive to the second magnetic field signal and another input responsive to a second predetermined threshold and an output at which is provided a second predetermined threshold detector output signal having a second predetermined threshold detector phase, wherein a difference between the first and second predetermined threshold detector phases is indicative of a movement direction of the object, a first tracking threshold detector responsive to the first magnetic field signal and an output at which is provided a first tracking threshold detector output signal having a frequency indicative of a tracking threshold speed of the object and a first tracking threshold detector phase, a second tracking threshold detector responsive to the second magnetic field signal and an output at which is provided a second tracking threshold detector output signal having a second tracking threshold detector phase different than the first tracking threshold detector phase, wherein a difference between the first and second tracking threshold detector phases is indicative of the movement direction of the object. The circuit also includes an output signal selector coupled to receive the first predetermined threshold detector output signal, the second predetermined threshold detector output signal, the first tracking threshold detector output signal, and the second tracking threshold detector output signal and configured to generate a circuit output signal related to at least one of the received detector signals based upon a predetermined condition.

In a further embodiment, the circuit includes one or more of the following features: the predetermined condition is related to a predetermined number of cycles of one of the first or second magnetic field signals; the predetermined condition is related to a predetermined number of cycles of one of the first predetermined threshold detector output signal, second predetermined threshold detector output signal, first tracking threshold detector output signal, or second tracking threshold detector output signal; the predetermined condition corresponds to a predetermined time, and; at least one of an automatic gain control coupled to one of the first pair or the second pair of magnetic field sensing elements and configured to process a corresponding one of the first or second magnetic field signals, wherein the predetermined condition corresponds to a condition of the automatic gain control, or an automatic offset adjustment coupled to one of the first pair or the second pair of magnetic field sensing elements and configured to process a corresponding one of the first or second magnetic field signals, wherein the predetermined condition corresponds to a condition of the automatic offset adjustment.

In accordance with yet another aspect, a method of detecting a movement of an object includes generating a magnetic field signal proportional to a magnetic field associated with the object, generating a tracking signal responsive to the magnetic field signal to track positive and negative peaks of the magnetic field signal, generating a predetermined threshold output signal responsive to the magnetic field signal and to a predetermined threshold, generating a tracking threshold output signal responsive to the magnetic field signal and to the tracking signal, and providing an overall output signal related to a selected one of the predetermined threshold output signal or the tracking threshold output signal based upon a predetermined condition.

In another embodiment, the method includes one or more of the following features: the predetermined condition is related to a predetermined number of cycles of the magnetic field signal; the predetermined condition is related to a predetermined number of cycles of the predetermined threshold output signal; the predetermined condition corresponds to a predetermined time; processing the magnetic field signal using at least one of an automatic gain control, wherein the predetermined condition corresponds to a condition of the automatic gain control, or an automatic adjustment control, wherein the predetermined condition corresponds to a condition of the automatic adjustment control; said providing the overall output signal further includes selecting the overall output signal to be related to the predetermined threshold output signal during a calibration time period, and selecting the overall output signal to be related to the tracking threshold output signal after the calibration time period, wherein the predetermined condition corresponds to the end of the calibration time period; said magnetic field signal is a first magnetic field signal proportional to a magnetic field of the object at a first position, said tracking signal is a first tracking signal responsive to the first magnetic field signal, said tracking threshold output signal is a first tracking threshold output signal responsive to the first magnetic field signal and to the first tracking signal, wherein the first tracking threshold output signal has a frequency indicative of a movement speed of the object and a first tracking threshold output signal phase, and said predetermined threshold output signal is a first predetermined threshold output signal responsive to the first magnetic field signal and to a first predetermined threshold, the first predetermined threshold output signal having a frequency indicative of the movement speed of the object and having a first predetermined threshold output signal phase, further including generating a second magnetic field signal proportional to a second magnetic field associated with the object at a second position offset from the first position, generating a second tracking signal responsive to the second magnetic field signal to track positive and negative peaks of the second magnetic field signal, generating a second tracking threshold output signal responsive to the second magnetic field signal and to the second tracking signal and having a second tracking threshold output signal phase, a difference of the first and second tracking threshold output signal phases indicative of a movement direction of the object, and generating a second predetermined threshold output signal responsive to the second magnetic field signal and to a second predetermined threshold and having a second predetermined threshold output signal phase, a difference of the first and second output signal phases indicative of movement direction of the object, wherein said overall output signal is further related to a selected one of a combination of the first and second predetermined threshold output signals or a combination of the first and second tracking threshold output signals based upon the predetermined condition; the predetermined condition is related to a predetermined number of cycles of one of the first or second magnetic field signals; the predetermined condition is related to a predetermined number of cycles of one of the first predetermined threshold detector output signal, second predetermined threshold detector output signal, first tracking threshold detector output signal, or second tracking threshold detector output signal; the predetermined condition corresponds to a predetermined time, and; further including processing one of the first or second magnetic field signals using at least one of an automatic gain control, wherein the predetermined condition corresponds to a condition of the automatic gain control, or an automatic offset adjustment, wherein the predetermined condition corresponds to a condition of the automatic offset adjustment.

### BRIEF DESCRIPTION OF THE DRAWINGS

The foregoing features of the invention, as well as the invention itself may be more fully understood from the following detailed description of the drawings, in which:
FIG. 1 is a block diagram showing an exemplary circuit for object motion detection, having a predetermined threshold detector, a tracking threshold detector, and an output signal selector;
FIG. 2 is a block diagram showing another exemplary circuit for object motion detection, having one or more predetermined threshold detectors, one or more tracking threshold detectors, and an output signal selector;
FIG. 3 is a block diagram showing an exemplary peak-to-peak percentage detector that can be used in the tracking threshold detector of FIG. 1;
FIG. 4A is a block diagram showing an exemplary peak referenced detector that can be used in the tracking threshold detector of FIG. 1;
FIG. 4B is a graph showing illustrative waveforms associated with the peak referenced detector of FIG. 4A;
FIG. 5 is a block diagram showing an exemplary zero-crossing detector that can be used in the tracking threshold detector of FIG. 1;
FIG. 6 is a flow chart representative of a method for object motion detection that may be implemented in the circuit of FIGS. 1 and 2;
FIG. 7 is a graph showing magnetic field signals and predetermined threshold detector output signals associated with a circuit embodiment of FIG. 2;
FIG. 8 is a graph showing magnetic field signals and tracking threshold detector output signals associated with a circuit embodiment of FIG. 2; and
FIG. 9 is a graph showing output signal selection of an output signal selector that can be used with a circuit embodiment of FIG. 2.

### DETAILED DESCRIPTION

Before describing the inventive systems, methods, and techniques, some introductory concepts and terminology are explained. As used herein, the term "magnetic field sensing element" is used to describe a variety of types of electronic elements that can sense a magnetic field. The magnetic field sensing elements can be, but are not limited to, Hall effect elements, magnetoresistance elements, or magnetotransistors. As is known, there are different types of Hall effect elements. These Hall effect elements may be made of a IV type semiconductor material such as Silicon (Si) or Germanium (Ge), or a III-V type semiconductor material such as Gallium-Arsenide (GaAs) or an Indium compound, for example, Indium-Antimonide (InSb).

As is also known, there are different types of magnetoresistance elements, for example, anisotropic magnetoresistance (AMR) elements, giant magnetoresistance (GMR) elements, tunneling magnetoresistance (TMR) elements, and magnetic tunnel junction (MTJ) elements.

Some of the above-described magnetic field sensing elements tend to have an axis of maximum sensitivity parallel to a substrate that supports the magnetic field sensing element, and others of the above-described magnetic field sensing elements tend to have an axis of maximum sensitivity perpendicular to a substrate that supports the magnetic field sensing element. In particular, most, but not all, types of magnetoresistance elements tend to have axes of maximum sensitivity parallel to the substrate and most, but not all, types of Hall elements tend to have axes of sensitivity perpendicular to a substrate.

As used herein, the term "magnetic field sensor" is used to describe a circuit that includes a magnetic field sensing element. Magnetic field sensors are used in a variety of applications including, but not limited to, a current sensor that senses a magnetic field generated by a current carried by a current-carrying conductor, a magnetic switch or proximity detector that senses the proximity of a ferromagnetic or magnetic object, a motion detector (e.g., a rotation detector) that senses passing ferromagnetic articles, for example, magnetic domains of a ring magnet or teeth of a ferromagnetic gear, and a magnetic field sensor that senses a magnetic field density of a magnetic field. Rotation detectors are used as examples herein. However, the circuits and techniques described herein apply also to any magnetic field sensor capable of detecting a motion of an object.

Operation of a magnetic field sensor in a so-called "calibration mode," also referred to herein as an "initialization mode," is described herein. Reference is also made herein to operation of a magnetic field sensor in a so-called "running mode." The calibration mode can occur at the beginning of operation (or from time to time as desired) and the running mode is achieved at other times. Operation of the running mode is described in greater detail in one or more of the above-mentioned patents, notably, U.S. Patent No. 5,917,320 and U.S. Patent No. 7,362,094, and US 2011/048102 describes a similar system.

While a calibration time period is discussed herein, and end of which ends the calibration mode discussed herein in accordance with certain criteria, it should be recognized that other calibrations can be performed after the end of the indicated calibration time period. For example, an automatic gain control can continue calibrating after the end of the indicated calibration time period. At some point after the end of the indicated calibration time period, but not necessarily coincident with the end of the indicated calibration time period, the magnetic field sensors described herein can enter the running mode, during which updates to values of circuit parameters can update in a different way than during the calibration mode.

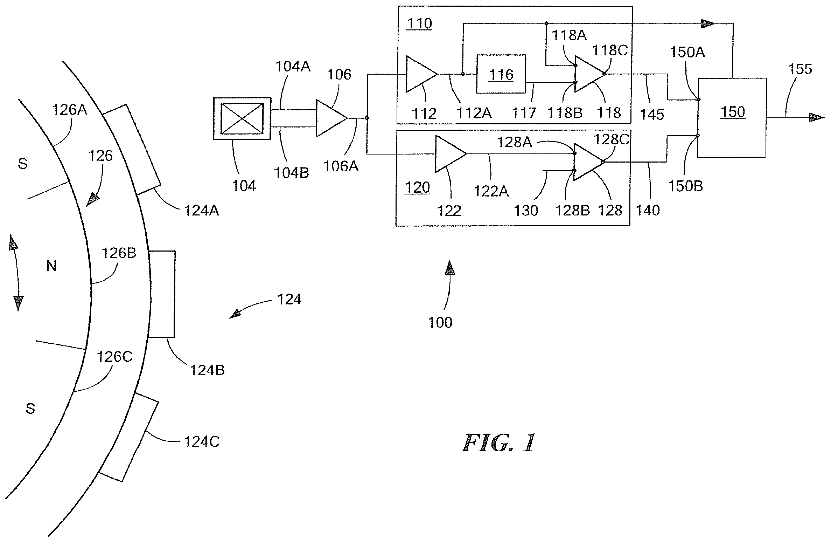

Referring to FIG. 1, an exemplary circuit 100 responsive to movement of an object 124 includes a magnetic field sensing element 104 for generating differential signal 104A, 104B (i.e., a magnetic field signal) proportional to a magnetic field associated with the object 124. The magnetic field sensing element 104 can include, but is not limited to, a Hall effect element, a magnetoresistance element, or a magnetotransistor.

The object 124 can be an object configured to rotate, for example, a ferromagnetic gear. The circuit 100 can include an amplifier 106 coupled to receive the differential signal 104A, 104B from the magnetic field sensing element 104 and configured to generate a signal 106A (also a magnetic field signal).

Circuit 100 also includes a predetermined threshold detector 120. In some embodiments, the predetermined threshold detector 120 includes an amplifier 122 coupled to receive the signal 106A and configured to generate a signal 122A (also a magnetic field signal). In some embodiments, the amplifier 122 includes an automatic gain control (AGC) amplifier and/or the circuit 100 includes an automatic offset adjustment (AOA).

The predetermined threshold detector 120 can include a comparator 128 having a first input 128A responsive to the magnetic field signal 122A, a second input 128B responsive to a predetermined threshold 130, and an output 128C at which is provided a predetermined threshold detector output signal 140. In some embodiments, the predetermined threshold 130 is an electrical signal having a reference voltage value, for example 1.5 volts.

Circuit 100 also includes a tracking threshold detector 110. In some embodiments, the tracking threshold detector 110 includes an amplifier 112 coupled to receive the signal 106A and configured to generate a signal 112A (also a magnetic field signal). In some embodiments, the amplifier 112 includes an AGC amplifier and/or the circuit 100 includes an AOA.

The tracking threshold detector 110 can include a tracking circuit 116 coupled to receive the signal 112A and configured to track positive and negative peaks of the signal 112A and to generate a tracking signal 117. The tracking threshold detector 110 can also include comparator 118 having a first input 118A responsive to signal 112A, a second input 118B responsive to an input signal related to the tracking signal 117, and an output 118C at which is provided a tracking threshold detector output signal 145.

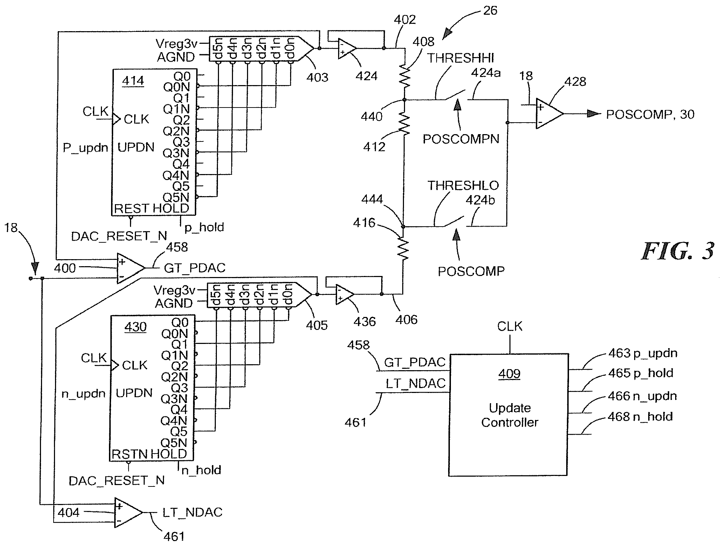

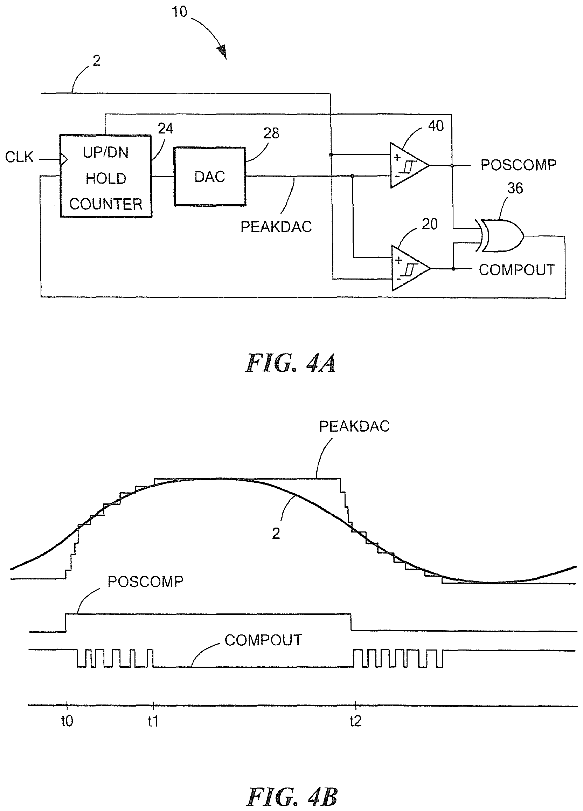

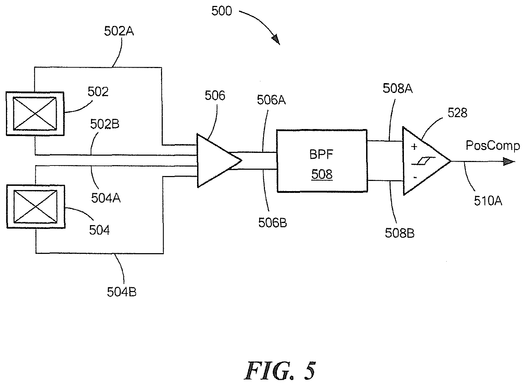

In further embodiments discussed in detail herein below, the tracking threshold detector 110 includes a peak-to-peak percentage detector (FIG. 3), a peak referenced detector (FIGS. 4A and 4B), a zero-crossing detector (FIG. 5), or combinations thereof.

In some embodiments, detectors 110, 120 are rotation detectors to detect rotational movements of the object 124, while in some other embodiments, detectors 110, 120 are translation detectors to detect translational movements of the object 124. It should be noted that detectors 110, 120 are not limited to detection of stated kinds of object movement, and may detect other types of object movements, including combinations of object rotation and translation.

It should be noted that signals 104A, 104B, 106A, 112A, 122A are all magnetic field signals, and are all indicative of a magnetic field experienced by the magnetic field sensing element 104.

Circuit 100 can also include an output signal selector 150 having a first input 150A responsive to the tracking threshold detector output signal 145, a second input 150B responsive to the predetermined threshold detector output signal 140, and configured to generate a circuit output signal 155 related to at least one of the predetermined threshold detector output signal 140 or the tracking threshold detector output signal 145 based upon a predetermined condition.

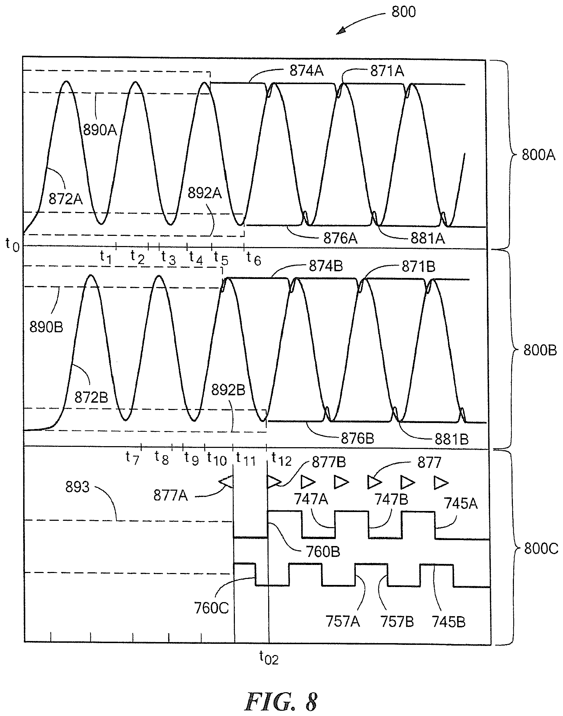

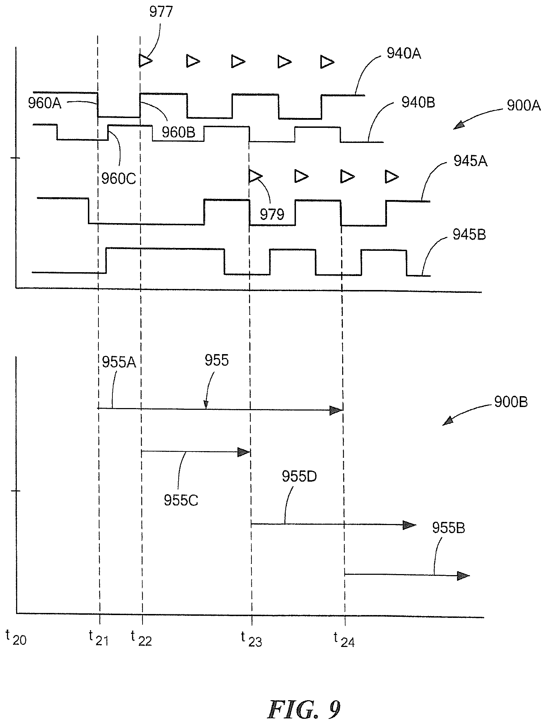

As will be described more fully below in conjunction with FIGS. 8 and 9, in some embodiments, output signal selector 150 is configured to generate the circuit output signal 155 related to the predetermined threshold detector output signal 140 during a calibration time period of the tracking threshold detector 110 and to generate the circuit output signal 155 related to the tracking threshold detector output signal 145 after the calibration time period wherein the predetermined condition corresponds to the end of the calibration time period.

In some embodiments, the predetermined condition is related to a predetermined number of cycles of the magnetic field signal 106A, for example, three cycles.

In other embodiments, the predetermined condition is related to a predetermined number of cycles of the predetermined threshold detector output signal 140, for example, three cycles.

In still other embodiments, the predetermined condition corresponds to a predetermined time, for example, 1.0 second. In some embodiments, the predetermined time is related to the rotation speed and/or a predetermined time after rotation is detected. For faster rotation speeds, the time can be shorter while for slower rotation speeds the time can be longer.

In other embodiments, the circuit 100 includes at least one of an AGC or an AOA coupled to the magnetic field sensing element 104 and configured to process the signal (as may be similar to signal 106A). In these embodiments, the predetermined condition corresponds to a condition of the AGC, for example, a gain of the AGC that has not changed for 3 cycles of the signal or a condition of the AOA, for example, an offset value of the AOA.

The predetermined condition should not be construed as limited to the above described conditions but can also be based on various algorithms to determine when tracking threshold detector 110 is calibrated and to determine proper rotation speed and/or direction information.

In some arrangements, the magnetic field sensing element 104 can be responsive to motion of the object 124, for example, motion of ferromagnetic gear teeth upon a gear, of which gear teeth 124A-124C upon the gear 124 are representative. To this end, a fixed magnet (not shown) can be disposed proximate to the magnetic field sensing element 104 and the gear teeth can disturb the magnetic field generated by the magnet as the gear rotates. However, in other arrangements, the magnetic field sensing element 104 can be responsive to movement of magnetic regions upon a magnet, for example, magnetic regions 126A-126C upon a ring magnet 126. In some particular arrangements, the ring magnet 126 and the gear 124 are coupled together with a shaft or the like. In these particular arrangements, the ring magnet 126 can be proximate to the magnetic field sensing element 104.

The magnetic field sensing element 104 is responsive to proximity of the ring magnet 126 and, in particular, to proximity of passing magnetic regions north (N) and south (S) 126A-126C. In operation, the magnetic field sensing element 104 produces the differential magnetic field signal 104A, 104B (and also the magnetic field signals 106A, 112A, 122A) having a generally repeating pattern when the ring magnet 126 rotates, wherein each peak (positive and negative) of the pattern is associated with one of the magnetic regions N, S.

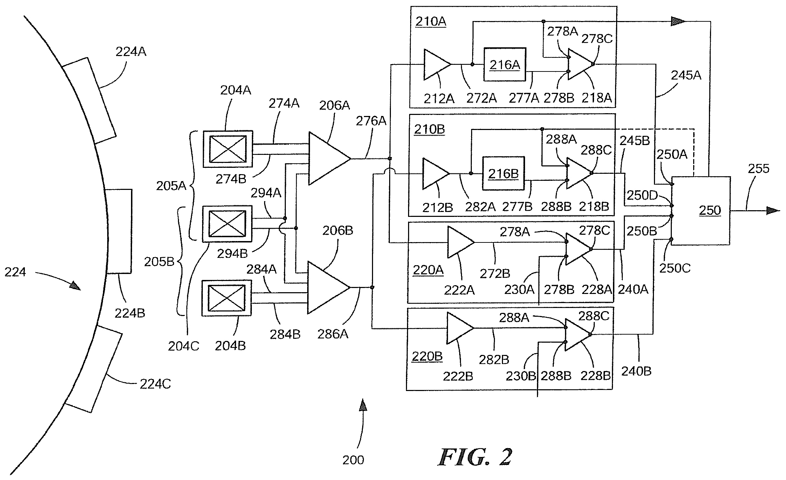

Referring now to FIG. 2, in a further embodiment, a circuit 200 includes a first predetermined threshold detector 220A, a second predetermined threshold detector 220B, and a tracking threshold detector 210A. The circuit 200 can also include a first pair of magnetic field sensing elements 205A, including magnetic field sensing element 204A and magnetic field sensing element 204C, operative to provide a differential magnetic field signal 274A, 274B, 294A, 294B proportional to a magnetic field associated with an object 224. In some embodiments, the circuit 200 can include an amplifier 206A coupled to receive a differential signal 274A, 274B from the first pair of magnetic field sensing elements 205A and configured to generate a signal 276A (also a magnetic field signal).

In some embodiments, the first predetermined threshold detector 220A can include an amplifier 222A coupled to receive the signal 276A and configured to generate a signal 272B (also a magnetic field signal). In some embodiments, the amplifier 222A includes an AGC amplifier and/or the circuit 100 includes an AOA.

The first predetermined threshold detector 220A can include a comparator 228A having a first input 278A responsive to the magnetic field signal 272B, a second input 278B responsive to a predetermined threshold 230A, and an output 278C at which is provided a first predetermined threshold detector output signal 240A. The predetermined threshold 230A may include a plurality of predetermined thresholds, for example, a first predetermined threshold and a second predetermined threshold.

The circuit 200 can also include a second pair of magnetic field sensing elements 205B, including magnetic field sensing element 204B and magnetic field sensing element 204C, operative to provide a second differential magnetic field signal 284A, 284B, 294A, 294B proportional to the magnetic field associated with object 224. In some embodiments, circuit 200 can include an amplifier 206B coupled to receive the differential signal 284A, 284B, 294A, 294B from the second pair of magnetic field sensing elements 205B and configured to generate a signal 286A (also a magnetic field signal).

In further embodiments, the second predetermined threshold detector 220B includes an amplifier 222B coupled to receive the signal 286A and configured to generate a signal 282B (also a magnetic field signal). In still further embodiments, the amplifier 222B includes an AGC amplifier and/or the circuit 100 includes an AOA.

The second predetermined threshold detector 220B can also include a comparator 228B having a first input 288A responsive to the magnetic field signal 282B, a second input 288B responsive to a predetermined threshold 230B, and an output 288C at which is provided a second predetermined threshold detector output signal 240B. In some embodiments, the predetermined threshold 230B of detector 220B is the same as the predetermined threshold 230A of detector 220A, while in some other embodiments, the predetermined thresholds 230A, 230B are different.

In some embodiments, the tracking threshold detector 210A of circuit 200 includes an amplifier 212A coupled to receive the signal 276A and configured to generate a signal 272A (also a magnetic field signal). In some embodiments, the amplifier 212A includes an AGC amplifier and/or the circuit 100 includes an AOA.

The tracking threshold detector 210A can include a tracking circuit 216A coupled to receive the signal 272A and configured to track positive and negative peaks of the signal 272A and to generate a tracking signal 277A. The tracking threshold detector 210A can also include a comparator 218A having a first input 278A responsive to signal 272A, a second input 278B responsive to an input signal related to the tracking signal 277A, and an output 278C at which is provided a first tracking threshold detector output signal 245A.

The circuit 200 can also include an output signal selector 250 (as may be similar to output signal selector 150 described in conjunction with FIG. 1) having a first input 250A responsive to the tracking threshold detector output signal 245A, a second input 250B responsive to the first predetermined threshold detector output signal 240A, and a third input 250C responsive to the second predetermined threshold detector output signal 240B. The output signal selector 250 is configured to generate a circuit output signal 255 related to at least one of the first predetermined threshold detector output signal 240A, the tracking threshold detector output signal 245A, or the second predetermined threshold detector output signal 240B based upon a predetermined condition.

Output signal selector 250 selects signals 245A, 245B, 240A, 240B based on a predetermined condition and includes logic for example to determine speed and/or direction and/or vibration information based on one or more of these signals. For example, higher signal edge rates can correspond to relatively fast object movement and lower signal edge rates can correspond to relatively slow object movement. In embodiments in which the object is a rotating gear, for example, signal frequency (related to edge rate) is indicative of rotation speed of the gear. The relative phase sequences of rising and falling edges of two of the signals can be used to determine a direction of object movement. It will be understood that logic to determine speed and/or direction information may include analog logic, digital logic, and/or mixed logic.

In these embodiments, the first predetermined threshold detector output signal 240A has a first predetermined threshold detector phase and the second predetermined threshold detector output signal 240B has a second predetermined threshold detector phase. A difference between the first and second predetermined threshold detector phases is indicative of a movement direction of the object 224. A frequency of either the predetermined threshold detector output signal 240A, the threshold detector output signal 245A, or the second predetermined threshold detector output signal 240B is related to a speed of rotation of the object 224.

In a further embodiment, the predetermined condition is related to a predetermined number of cycles of one of the first or second magnetic field signals 276A, 286A, for example, three cycles.

In another embodiment, the predetermined condition is related to a predetermined number of cycles of one of the first or second predetermined threshold detector output signals 240A, 240B, for example, three cycles.

In a further embodiment, the predetermined condition corresponds to a predetermined time. In some embodiments, the predetermined time is related to the rotation speed and/or a predetermined time after rotation is detected.

In another embodiment, circuit 200 includes an AGC coupled to one of the first or second pair of magnetic field sensing elements 205A, 205B and configured to process a respective one of the first or second magnetic field signals (276A, 286A) wherein the predetermined condition corresponds to a condition of the AGC, for example, a gain of the AGC. Circuit 200 optionally includes an AOA coupled to one of the first or second pair of magnetic field sensing elements 205A, 205B and configured to process a respective one of the first or second magnetic field signals (276A, 286A) wherein the predetermined condition corresponds to a condition of AOA.

Referring again to FIG. 2, in another embodiment, the circuit 200 includes the first tracking threshold detector 210A, a second tracking threshold detector 210B, and the first predetermined threshold detector 220A. In this embodiment, circuit 200 includes the first pair of magnetic field sensing elements 205A and the second pair of magnetic field sensing elements 205B.

In some embodiments, the second tracking threshold detector 210B includes an amplifier 212B coupled to receive the signal 286A (from the second magnetic field sensing element 205B) and configured to generate a signal 282A (also a magnetic field signal). In some embodiments, the amplifier 212B is an AGC amplifier and/or the circuit 100 includes an AOA.

The second tracking threshold detector 210B can include a tracking circuit 216B coupled to receive the signal 282A and configured to track positive and negative peaks of the signal 282A and to generate a tracking signal 277B. The second tracking threshold detector 210B can also include a comparator 218B having a first input 288A responsive to signal 282A, a second input 288B responsive to an input signal related to the tracking signal 277B, and an output 288C at which is provided a second tracking threshold detector output signal 245B.

In this embodiment, the circuit 200 includes the output signal selector 250 (as may be similar to output signal selector 150 described in conjunction with FIG. 1) having a first input 250A responsive to the first tracking threshold detector output signal 245A, a second input 250D responsive to the second tracking threshold detector output signal 245B, and a third input 250B responsive to the first predetermined threshold detector output signal 240A. The output signal selector 250 is configured to generate a circuit output signal 255 related to at least one of the first tracking threshold detector output signal 245A, the first predetermined threshold detector output signal 240A, or the second tracking threshold detector output signal 245B based upon a predetermined condition.

In this embodiment, the first tracking threshold detector output signal 245A has a first tracking threshold detector phase and the second tracking threshold detector output signal 245B has a second tracking threshold detector phase. A difference between the first and second tracking threshold detector phases is indicative of a movement direction of the object 224. A frequency of either the first tracking threshold detector output signal 245A, the first predetermined threshold detector output signal 240A, or the second tracking threshold detector output signal 245B is related to a speed of rotation of the object 224.

Referring yet again to FIG. 2, in a further embodiment, a circuit 200 includes the first tracking threshold detector 210A, the second tracking threshold detector 210B, the first predetermined threshold detector 220A, and the second predetermined threshold detector 220B. In this embodiment, the output signal selector 250 includes a first input 250A responsive to the first tracking threshold detector output signal 245A, a second input 250B responsive to the first predetermined threshold detector output signal 240A, a third input 250C responsive the second predetermined threshold detector output signal 240B, and a fourth input 250D responsive the second tracking threshold detector output signal 245B. In such an arrangement, the output signal selector 250 is configured to provide the circuit output signal 255 corresponding to a combination of the first and second tracking threshold detector output signals 245A, 245B or a combination of the first and second predetermined threshold detector output signals 240A, 240B based upon the predetermined condition.

In a further embodiment, the predetermined condition is related to a predetermined number of cycles of one of the first or second magnetic field signals 276A, 286A, for example, three cycles.

In a further embodiment, the predetermined condition is related to a predetermined number of cycles of one of the first predetermined threshold detector output signal 240A, the second predetermined threshold detector output signal 240B, the first tracking threshold detector output signal 245A, or the second tracking threshold detector output signal 245B, for example, three cycles.

In a further embodiment, at least one of the first or second predetermined threshold detectors 220A, 220B includes a Schmitt trigger.

It should be apparent to one of ordinary skill in the art that the circuit is not limited to above-described configurations, and may encompass other desired configurations including multiple tracking threshold detectors (i.e., more than two tracking threshold detectors) and/or multiple predetermined threshold detectors (i.e., more than two predetermined threshold detectors).

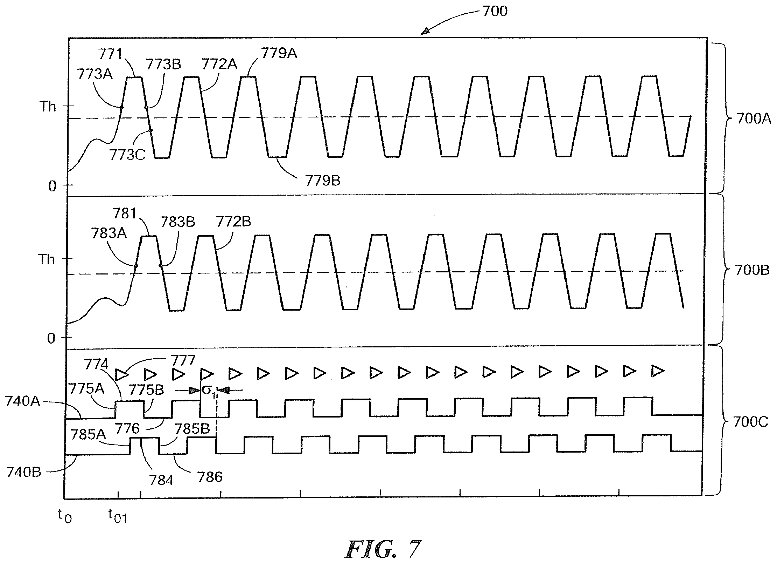

Operation of the circuits 100, 200 is described below in conjunction with FIG. 7 - 9.

Referring now to FIG. 3, a peak-to-peak percentage detector 26 suitable for use as the tracking circuit 116 of FIG. 1 is shown. Peak-to-peak percentage detector 26 is coupled to a comparator 428, like comparator 118 of FIG. 1. A magnetic field signal 18, like signal 112A of FIG. 1, is provided as an input to the detector 26.

Magnetic field signal 18 is applied to a non-inverting input of a first comparator 400 and to the inverting input of a second comparator 404. The output signals of comparators 400 and 404 provide input signals GT_PDAC 458 and LT_NDAC 461, respectively, to an update controller 409 that provides control signals to counters 414 and 430, as shown.

The update controller 409 provides a p_updn signal 463 to an UPDN (up/down) input of a counter 414 to control the count direction. As will become apparent, the p_updn signal 463 normally causes the counter 414 to count up. Under certain conditions however, the p_updn signal 463 causes the counter 414 to count down for some clock cycles. The counter 414 is clocked by a system clock signal, CLK. A p_hold signal 465 is coupled to a HOLD input of the counter 414. The counter output is held constant (i.e., the counter is disabled) when the HOLD input signal is at a first logic level and is released (i.e., the counter is enabled) when HOLD input signal is at a second logic level. The counter 414 may be a six bit counter which is enabled when the HOLD input is low.

The outputs of the counter 414 are coupled to inputs of a positive digital-to-analog converter (PDAC) 403. The PDAC 403 is buffered by a buffer 424 to provide a PDAC signal 402, which may be a voltage that tracks positive peaks of the magnetic field signal 18 (i.e., a tracking signal).

The comparator 400, counter 414, PDAC 403, and buffer 424 comprise a "positive portion" of the detector circuitry. A "negative portion" of the detector 26 is similarly arranged, as shown. In particular, update controller 409 provides an n_updn signal 466 to an UPDN input of counter 430 to control the count direction. As will become apparent, the n_updn signal 466 normally causes the counter 430 to count down. Under certain conditions however, the n_updn signal 466 causes the counter 430 to count up for some clock cycles. The counter 430 is clocked by a system clock signal, CLK. An n_hold signal 468 is coupled to a HOLD input of the counter 430. The counter output is held constant (i.e., the counter is disabled) when the HOLD input signal is at a first logic level and is released (i.e., the counter is enabled) when the HOLD input signal is at a second logic level. The counter 430 may be a six bit counter which is enabled when the HOLD input is low.

The outputs of the counter 430 are coupled to inputs of a negative digital-to-analog converter (NDAC) 405. The NDAC 405 is buffered by a buffer 436 to provide an NDAC signal 406, which may be a voltage that tracks negative peaks of the magnetic field signal 18 (i.e., a tracking signal).

The buffered PDAC and NDAC signals 402, 406 are coupled to a resistor divider comprising series-coupled resistors 408, 412, and 416 in order to generate peak-to-peak threshold signals THRESHHI and THRESHLO, as will be described more fully below in conjunction with FIG. 8.

Each of the threshold signals THRESHHI and THRESHLO is a percentage of the difference between the PDAC and NDAC voltages, or, in other words, a percentage of the peak-to-peak magnetic field signal 18. As described more fully below in conjunction with FIG. 8, in one embodiment, an upper threshold value 440 is at approximately 75% of the peak-to-peak signal and a lower threshold value 444 is at approximately 25% of the peak-to-peak signal. It will be appreciated that other percentages may be suitable. Switches 424a and 424b are arranged and controlled so as to apply one of the threshold levels to comparator 428, as shown. Switch 424b is controlled by the POSCOMP signal. In particular, switch 424a is controlled by an inverted version of the POSCOMP signal, or POSCOMPN. Further, the magnetic field signal 18 is applied to a non-inverting input of comparator 428.

Referring now to FIG. 4A, a peak referenced detector 10 suitable for use as the tracking threshold detector 110 of FIG. 1 is shown, which uses a single digital-to-analog converter (DAC) 28 to track a magnetic field signal 2. The magnetic field signal 2 is coupled to an inverting input of a tracking comparator 20 which receives at a non-inverting input an output signal PEAKDAC (i.e., the tracking signal) of a DAC 28, as shown. The magnetic field signal 2 is further coupled to an inverting input of a comparator 40, like comparator 118 of FIG. 1, which receives at the non-inverting input the PEAKDAC signal and which generates a detector output signal, POSCOMP. The comparator 40 has internal hysteresis, here on the order of 100 mV, so that the POSCOMP output signal changes state when the magnetic field signal 2 exceeds the PEAKDAC signal by approximately 100 mV. The output signal of the comparator 20, COMPOUT, is coupled to an exclusive OR (XOR) gate 36 which additionally receives the POSCOMP signal and which provides a HOLD input signal to an up/down counter 24. Counter 24 is further responsive to a clock signal, CLK, and to the POSCOMP signal for controlling whether counter 24 counts up or down. The output of the counter 24 is converted into the tracking PEAKDAC signal by the DAC 28.

As illustrated in FIG. 4B, whenever the magnetic field signal 2 exceeds the PEAKDAC signal by the small hysteresis level of comparator 20, the COMPOUT signal transitions to a logic high level. The HOLD input to the counter 24 is coupled to the exclusive OR (XOR) gate 36, which is coupled to COMPOUT and additionally receives the POSCOMP signal. Once the counter 24 counts up one step, the COMPOUT signal goes low causing the count value to be held until the signal exceeds the PEAKDAC signal by the small hysteresis level of comparator 20 again. When the signal reaches a positive peak, as occurs at time t₁, the PEAKDAC signal stays above the signal 2, thereby causing the HOLD input to the counter 24 to be asserted until the hysteresis of the comparator 40 has been overcome, as occurs when the POSCOMP signal goes low, just before time t₂. In this way, the positive and negative peaks of the signal are tracked by the PEAKDAC signal and the detector output signal POSCOMP transitions when the signal differs from the PEAKDAC signal by more than the hysteresis amount of comparator 40 (as occurs at times to and t₂).

Referring now to FIG. 5, a so-called "zero-crossing detector" 500, a tracking and comparator circuit, can be compared with the tracking circuit 116 and comparator 118 of FIG. 1. Here, an amplifier 506 is coupled to receive signals 502A, 502B, 504A, 504B from two magnetic field sensing elements 502, 504. The amplifier 506 is configured to generate a differential magnetic field signal 506A, 506B coupled to a band pass filter (BPF) 508. The magnetic field signal 506A, 506B is comparable to the magnetic field signal 106A of FIG. 1. The BPF 508 is configured to generate a differential filtered signal 508A, 508B. A comparator 528 is coupled to receive the differential filtered signal 508A, 508B and configured to generate a motion signal, POSCOMP 510A.

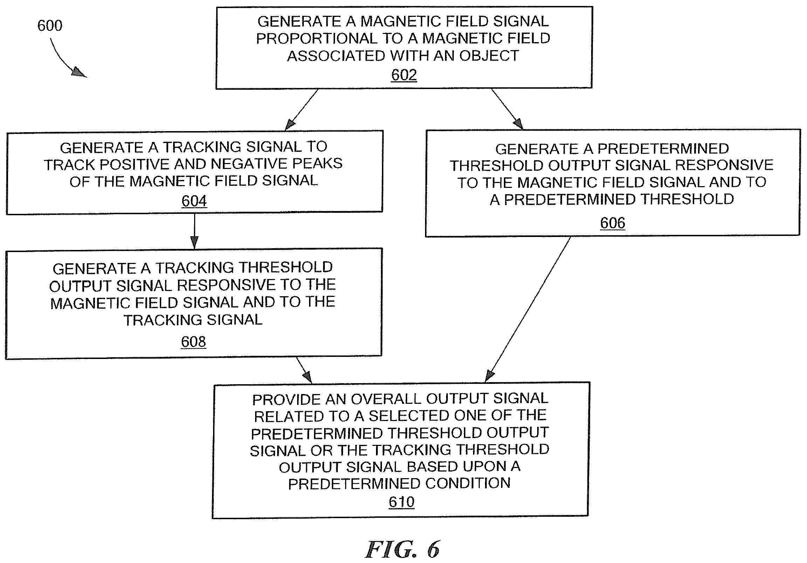

Referring now to FIG. 6, a method 600 of detecting a movement of an object includes, at 602 generating a magnetic field signal proportional to a magnetic field associated with the object, at 604, generating a tracking signal responsive to the magnetic field signal to track positive and negative peaks of the magnetic field signal, at 606, generating a predetermined threshold output signal responsive to the magnetic field signal and to a predetermined threshold, at 608, generating a tracking threshold output signal responsive to the magnetic field signal and to the tracking signal and, at 610, providing an overall output signal related to a selected one of the predetermined threshold output signal or the tracking threshold output signal based upon a predetermined condition.

It should be appreciated that method 600 could be implemented in a circuit, for example, circuit 100 described in conjunction with FIG. 1, or circuit 200 described in conjunction with FIG. 2. Furthermore, one or more of the method steps (i.e., steps 602, 604, 606, 608, 610) may be implemented in a processor and, in particular, may be implemented as computer software instructions loaded from a memory into a processor for execution.

Alternatively, one or more of the method steps may be performed by functionally equivalent circuits such as a digital signal processor circuit or an application specific integrated circuit (ASIC). The method does not depict the syntax of any particular programming language. Rather, the method illustrates the information one of ordinary skill in the art requires to fabricate circuits or to generate computer software to perform the processing required to implement at least a portion of the techniques described herein. It will be appreciated by those of ordinary skill in the art that the particular sequence of steps described is illustrative only and can be varied without departing from the spirit of the techniques described herein.

In a further embodiment of method 600, the predetermined condition is related to a predetermined number of cycles of the magnetic field signal. In a non-limiting example, a processor may process the magnetic field signal to recognize a predetermined number of cycles of the magnetic field signal (for example, three cycles of the magnetic field signal). The processor determines that the predetermined condition has been met (i.e., that three cycles of the magnetic field signal have occurred) and provides an overall output signal by selecting one of the predetermined threshold output signal or the tracking threshold output signal. In one configuration, the processor provides an overall output signal related to the predetermined threshold output signal before the predetermined condition is realized (i.e., before the processor recognizes the predetermined number of cycles of the magnetic field signal), and provides the overall output signal related to the tracking threshold output signal after the predetermined condition is realized (i.e., after the processor recognizes the predetermined number of cycles of the magnetic field signal).

In another embodiment of the method 600, the predetermined condition is related to a predetermined number of cycles of the predetermined threshold output signal. In a non-limiting example, a processor may process the predetermined threshold output signal to recognize a predetermined number of cycles of the signal (for example, three cycles of the predetermined threshold output signal). The processor determines that the predetermined condition has been met (i.e., that three cycles of the predetermined threshold output signal have occurred) and provides an overall output signal by selecting one of the predetermined threshold output signal or the tracking threshold output signal. In one configuration, the processor provides an overall output signal related to the predetermined threshold output signal before the predetermined condition is realized (i.e., before the processor recognizes three cycles of the predetermined threshold output signal), and provides the overall output signal related to the tracking threshold output signal after the predetermined condition is realized (i.e., after the processor recognizes the three cycles of the predetermined threshold output signal).

In a further embodiment of the method 600, the predetermined condition corresponds to a predetermined time. The predetermined time may optionally be related to a calibration time of a circuit, such as circuit 100 described in conjunction with FIG. 1 or circuit 200 described in conjunction with FIG. 2. As will be described more fully below, the calibration time may correspond to a calibration period related to offset and gain adjustments of the differential signals.

Accordingly, in a further embodiment, the method 600 includes selecting the overall output signal to be related to the predetermined threshold output signal during a calibration time period and selecting the overall output signal to be related to the tracking threshold output signal after the calibration time period. In this way, the predetermined condition corresponds to the end of the calibration time period.

In a non-limiting example, a processor provides a selected one of the predetermined threshold output signal or the tracking threshold output signal based upon the predetermined time (for example, in some embodiments, the time is related to target rotation speed). In a further embodiment, the predetermined time is defined relative to a time at which an object whose movement is to be detected begins to move or a time at which a circuit (as may be the same or similar to circuit 200) starts up or powers up. In a non-limiting example, the object is a rotating gear coupled to a rotating shaft of an engine. The rotating gear can be used to detect motion (and, more particularly, the speed and direction of motion) of engine components. By way of a non-limiting example, for a vehicle, this may include motion detection of a crankshaft, exhaust camshaft, intake camshaft, piston, connecting rods, valves, transmission gears, wheels, etc.

It should be noted that the predetermined time may be defined relative to various timing events. For example, the above-mentioned engine may be placed in a neutral state during which engine components are at rest (or at idle) and no movement detection is desired or necessary. However, once the engine is engaged and components begin to operate, the processor tracks the elapsed time and provides the predetermined threshold output signal until reaching the predetermined time, after which, the processor provides the tracking threshold output signal.

In another embodiment, the method 600 includes processing the magnetic field signal using an AGC, wherein the predetermined condition corresponds to a condition of the AGC, for example, at a time when the AGC stops updating. In still further embodiments, the method 600 includes processing the magnetic field signal using an AOA, wherein the predetermined condition corresponds to a condition of the AOA, for example, an offset value.

Referring now to FIG. 7, a graph 700 has a horizontal axis with a scale in arbitrary units of time and a vertical axis in arbitrary units of voltage. One portion 700A of the graph 700 includes a time-varying magnetic field signal 772A representative of, for example, the magnetic field signal 272B of FIG. 2. The magnetic field signal 772A is responsive to a magnetic field associated with the movement of an object, as may be similar to object 224 described in conjunction with FIG. 2.

Another portion 700C of the graph 700 includes a predetermined threshold detector output signal 740A representative of, for example, the predetermined threshold detector output signal 240A output from predetermined threshold detector 220A of FIG. 2. In operation, the predetermined threshold detector output signal 740A is representative of the output of a comparator (as may be similar to comparator 228A described in conjunction with FIG. 2) coupled at a first input to the magnetic field signal 772A and at a second input to a reference voltage representative of a predetermined threshold Th. The magnetic field signal 772A crosses the predetermined threshold Th (here point 773A, 773B) as it heads toward and away from a peak of the signal 772A (an example of such a peak is designated by reference numeral 771), causing the output of the comparator to change from a first state (an example of which is designated by reference numeral 776) to a second state (an example of which is designated by reference numeral 774), and then back to the first state 776. The first and second states 776, 774 of the predetermined threshold detector output signal 740A are separated by positive and negative edges (examples of which are designated respectively by reference numerals 775A and 775B). In the same or different embodiment, the predetermined threshold Th includes a first predetermined threshold (i.e., predetermined threshold at point 773A) and a second predetermined threshold (for example, predetermined threshold at point 773C) which induce the first and second states 776, 774.

In some embodiments, the first and second states 776, 774 of the predetermined threshold detector output signal 740A are responsive to a time-varying magnetic field associated with an object and sensed by a pair of magnetic field sensing elements (as may be similar to first pair of magnetic field sensing elements 205A described in conjunction with FIG. 2), which provides the signal 772A. The magnetic field signal 772A exhibits a pattern (which is shown here for simplicity to be a sinusoidal pattern) related to the time-varying magnetic field produced by the object as it moves past the magnetic field sensing elements (and, more particularly, as portions of the object, such as gear teeth 224A, 224B, 224C of object 224, move past the magnetic field sensing elements). The first and second states 776, 774 of the predetermined threshold detector output signal 740A can be said to encode the cycles of the pattern and, in this way, are indicative of object movement that induces the pattern. In some embodiments, the second state 774 is related to portions of the object (such as a subset of the gear teeth having a north or south polarity) as they move past the magnetic field sensing elements. In some embodiments, the magnetic field signal 772A saturates (examples of which are designated by reference numerals 779A and 779B).

Another portion 700B of the graph 700 includes a time-varying magnetic field signal 772B representative of, for example, the magnetic field signal 282B of FIG. 2. The magnetic field signal 772B is responsive to a magnetic field associated with the movement of an object, as may be similar to object 224 described in conjunction with FIG. 2.

Graph 700 (at portion 700C) includes a predetermined threshold detector output signal 740B representative of, for example, the predetermined threshold detector output signal 240B output from predetermined threshold detector 220B of FIG. 2. In operation, the predetermined threshold detector output signal 740B is representative of the output of a comparator (as may be similar to comparator 228B described in conjunction with FIG. 2) coupled at a first input to the magnetic field signal 772B and at a second input to a reference voltage representative of a predetermined threshold Th. The magnetic field signal 772B crosses the predetermined threshold Th (here points 783A, 783B) as it heads toward and away from a peak of signal 772B (an example of such a peak is designated by reference numeral 781) causing the output of the comparator to change from a first state (an example of which is designated by reference numeral 786) to a second state (an example of which is designated by reference numeral 784), and then back to the first state 776. The first and second states 786, 784 of the predetermined threshold detector output signal 740B are separated by positive and negative edges (examples of which are designated respectively by reference numerals 785A and 785B).

In some embodiments, the first and second states 786, 784 of the predetermined threshold detector output signal 740B are responsive to a time-varying magnetic field associated with an object and sensed by a pair of magnetic field sensing element (as may be similar to second pair of magnetic field sensing elements 205B described in conjunction with FIG. 2), which provides the signal 772B. The magnetic field signal 772B exhibits a pattern (which is shown here for simplicity to be a sinusoidal pattern) related to the time-varying magnetic field as the object moves past the magnetic field sensing elements (and, more particularly, as portions of the object, such as gear teeth 224A, 224B, 224C of object 224, move past the magnetic field sensing elements). The first and second states 786, 784 of the predetermined threshold detector output signal 740B can be said to encode cycles of the pattern and, in this way, are indicative of object movement that induces the pattern. In some embodiments, the second state 784 is related to portions of the object (such as a subset of the gear teeth having a north or south polarity) as they move past the magnetic field sensing elements.

An edge rate or period of the predetermined threshold detector output signals 740A, 740B are indicative of a speed of object movement. In other words, higher edge rates correspond to relatively fast object movement and lower edge rates correspond to relatively slow object movement. In embodiments in which the object is a rotating gear, signal frequency is indicative of rotation speed of the gear.

In FIG. 7, an orientation of triangular icons 777 is indicative of a direction of object movement. As can be seen in graph 700, all of the icons are oriented toward the right-hand side of the paper indicating that the object is moving in the same direction over the entire graphed time. Furthermore, the predetermined threshold detector output signals 740A, 740B can be said to have a relative phase. The relative phase sequences of rising and falling edges can be used to determine a direction of object movement. In embodiments in which the object is a rotating gear, icon direction is indicative of clockwise or counter-clockwise rotational movement of the gear.

Referring now to FIG. 8, a graph 800 has a horizontal axis with a scale in arbitrary units of time and a vertical axis in arbitrary units of voltage. One portion 800A of the graph 800 includes a time-varying magnetic field signal 872A representative of, for example, the magnetic field signal 272A of FIG. 2. The magnetic field signal 872A is responsive to a magnetic field associated with the movement of an object, as may be similar to object 224 described in conjunction with FIG. 2. In normal operation, a PDAC signal 874A, which may be representative of the PDAC signal 402 described in conjunction with FIG. 3, can acquire and track positive peaks (an example of which is designated by reference numeral 871A). The PDAC signal 874A attempts to track the magnetic field signal 872A between various times in the cycle, for example, between times t₁ and t₂, eventually achieving a positive peak of the magnetic field signal 872A at about time t₅, which may be within about three cycles (or over a time period which may be related to a rotation speed of the detection target) of the magnetic field signal 872A. The PDAC signal 874A holds at other times.

It should be noted that the PDAC signal 874A is generated at times before achieving a positive peak of the magnetic field signal 872A (such times denoted by dashed line box 890A), but is inaccurate and does not represent the true motion detection information and so is not shown in FIG. 8. It should also be noted that in some embodiments, PDAC signal 874A is released just before positive peaks of magnetic field signal 872A (for example, just before positive peak 871A) and tracks the magnetic field signal 872A as it acquires the peak.

Similarly, an NDAC signal 876A , which may be representative of the NDAC signal 406 described in conjunction with FIG. 3, can acquire and track negative peaks (an example of which is designated by reference numeral 881A). The NDAC signal 876A attempts to track the magnetic field signal 872A between various times in the cycle, for example, between times t₃ and t₄, eventually achieving a negative peak of the magnetic field signal 872A at about time t₆, which may also be within about three cycles of the magnetic field signal 872A. The NDAC signal 876A holds at other times.

It should be noted that the NDAC signal 876A is generated at times before achieving a negative peak of the magnetic field signal 872A (such times denoted by dashed line box 892A), but is inaccurate and does not represent the true motion detection information and so is not shown in FIG. 8. It should also be noted that in some embodiments, NDAC signal 876A is released just before negative peaks of magnetic field signal 872A (for example, just before negative peak 881A) and tracks the magnetic field signal 872A as it acquires the peak.

Another portion 800B of the graph 800 includes a time-varying magnetic field signal 872B representative of, for example, the magnetic field signal 282A of FIG. 2. The magnetic field signal 872B is responsive to a magnetic field associated with the movement of an object, as may be similar to object 224 described in conjunction with FIG. 2. In normal operation, a PDAC signal 874B, which may be representative of the PDAC signal 402 described in conjunction with FIG. 3, can acquire and track positive peaks (an example of which is designated by reference numeral 871B). The PDAC signal 874B attempts to track the magnetic field signal 872B between various times in the cycle, for example, between times t₇ and t₈, eventually achieving a positive peak of the magnetic field signal 872A at about time t₁₁, which may be within about three cycles of the magnetic field signal 872A. The PDAC signal 874B holds at other times.

It should be noted that the PDAC signal 872B is generated at times before achieving a positive peak of the magnetic field signal 872B (such times denoted by dashed line box 890B), but is inaccurate and does not represent the true motion detection information and so is not shown in FIG. 8. It should also be noted that in some embodiments, PDAC signal 872B is released just before positive peaks of magnetic field signal 872B (for example, just before positive peak 871B) and tracks the magnetic field signal 872B as it acquires the peak.

Similarly, an NDAC signal 876B , which may be representative of the NDAC signal 406 described in conjunction with FIG. 3, can acquire and track negative peaks (an example of which is designated by reference numeral 881B). The NDAC signal 876B attempts to track the magnetic field signal 872B between various times in the cycle, for example, between times t₉ and t₁₀, eventually achieving a negative peak of the magnetic field signal 872B at about time t₁₂, which may also be within about three cycles of the magnetic field signal 872B. The NDAC signal 876B holds at other times.

It should be noted that the NDAC signal 876B is generated at times before achieving a negative peak of the magnetic field signal 872B (such times denoted by dashed line box 892B), but is inaccurate and does not represent the true motion detection information and so is not shown in FIG. 8. It should also be noted that in some embodiments, NDAC signal 876B is released just before negative peaks of magnetic field signal 872B (for example, just before negative peak 881B) and tracks the magnetic field signal 872B as it acquires the peak.

Another portion 800C of the graph 800 includes a tracking threshold detector output signal 745A representative of, for example, the tracking threshold detector output signal 245A output from tracking threshold detector 210A of FIG. 2. In operation, the tracking threshold detector output signal 745A is representative of the output of a comparator (as may be similar to comparator 218A described in conjunction with FIG. 2) coupled at a first input to the magnetic field signal 872A and at a second input to a tracking signal, as may be similar to the tracking signal 277A output from tracking circuit 216A and described in conjunction with FIG. 2.

The tracking threshold output signal 745A has edges 747A, 747B that align with positive and negative peaks, respectively, of the magnetic field signal 872A. It can be seen in FIG. 8 that at some time (e.g., at about t₆), edges of the tracking threshold output signal 745A will align to a peak-to-peak magnitude of the magnetic field signal 872A, at which time the tracking threshold detector can be said to be calibrated to the magnetic field signal 872A (i.e., the tracking threshold detector output signal 745A will accurately track the positive and negative peaks of the magnetic field signal 872A). The tracking threshold output signal 745A is generated at times before it aligns to the peak-to-peak magnitude of the magnetic field signal 872A (such times denoted by dashed line box 893), but is not used and so is not shown in FIG. 8.

Portion 800C of the graph 800 also includes a tracking threshold detector output signal 745B representative of, for example, the tracking threshold detector output signal 245B output from tracking threshold detector 210B of FIG. 2. In operation, the tracking threshold detector output signal 745B is representative of the output of a comparator (as may be similar to comparator 218B described in conjunction with FIG. 2) coupled at a first input to the magnetic field signal 872B and at a second input to a tracking signal, as may be similar to the tracking signal 277B output from tracking circuit 216B described in conjunction with FIG. 2.

Similarly to the above-described signal 745A, the tracking threshold output signal 745B has edges 757A, 757B that align with positive and negative peaks, respectively, of the magnetic field signal 872B. It can be seen in FIG. 8 that at some time (e.g., at about t₁₂), edges of the tracking threshold output signal 745B will correspond to a peak-to-peak magnitude of the magnetic field signal 872B, at which time the tracking threshold detector can be said to be calibrated to the magnetic field signal 872B (i.e., the tracking threshold detector output signal 745B will accurately track the positive and negative peaks of the magnetic field signal 872B). The tracking threshold output signal 745B is generated at times before it aligns to the peak-to-peak magnitude of the magnetic field signal 872B (such times denoted by dashed line box 893), but is not used and so is not shown in FIG. 8.

In FIG. 8, triangular icons (an example of which is designated by reference numeral 877) are indicative of speed and direction of object movement. An edge rate or period of the tracking threshold detector output signals 745A, 745B indicative of a speed of object movement. In other words, higher edge rates correspond to relatively fast object movement and lower edge rates correspond to relatively slow object movement. In embodiments in which the object is a rotating gear, signal frequency is indicative of rotation speed of the gear.

In FIG. 8, the orientation of triangular icons 877 is indicative of a direction of object movement. As can be seen in graph 800, a first triangular icon 877A is shown in phantom relief to indicate that although the directional output is generated it is inaccurate and so the directional information may be generated from the predetermined threshold detectors. The other icons (for example, icon designated by reference numeral 877B) are oriented toward the right-hand side of the paper. As may be the same or similar to the circuit arrangement described above in conjunction with FIG. 2, the first and second tracking threshold detector output signals 745A, 745B are responsive to object movement relative to offset magnetic field sensing elements (such as magnetic field sensing elements 204A, 204B). Accordingly, a relative phase sequence of rising and falling edges of the signal 745A, 745B is representative of object movement direction.

Successive edge 760C and edge 760B may be used to accurately determine and update the direction of object movement (as can be seen by triangular icon 877B and all successive icons). In embodiments in which the object is a rotating gear, icon direction is indicative of clockwise or counter-clockwise rotational movement of the gear.

Referring again to FIGS. 7 and 8, it can be seen that correct object movement information (in particular, direction of object movement) can be generated at a time near circuit start up or power up at time to using the predetermined threshold detector output signal (740A, 740B). For example, correct object movement direction information using the predetermined threshold detector output signal (740A, 740B) can be generated quickly after time to at time t₀₁. The correct object movement direction information using the tracking threshold detector output signal (745A, 745B) can be generated later than time t₀₁ at time t₀₂. At least a portion of the time difference can be attributed to the time required to calibrate the tracking threshold detectors. In contrast, the predetermined threshold detectors can generate object movement direction information whenever the magnetic field signal crosses the predetermined threshold values (e.g., 773A, 773B or 773A, 773C), which can occur relatively soon after a start up or power up period of the circuit.

Referring now to FIG. 9, first graph 900A has a horizontal axis with a scale in arbitrary units of time and a vertical axis in arbitrary units of voltage. Graph 900A includes a first predetermined threshold detector output signal 940A representative of, for example, the predetermined threshold detector output signal 240A output from the predetermined threshold detector 220A of FIG. 2, and a second predetermined threshold detector output signal 940B representative of, for example, the predetermined threshold detector output signal 240B output from the predetermined threshold detector 220B of circuit 200 of FIG. 2. Graph 900A also includes a first tracking threshold detector output signal 945A representative of, for example, the tracking threshold detector output signal 245A output from the tracking threshold detector 210A of FIG. 2, and a second tracking threshold detector output signal 945B representative of, for example, the tracking threshold detector output signal 245B output from the tracking threshold detector 210B of circuit 200 of FIG. 2.

A second graph 900B has a horizontal axis with a scale in arbitrary units of time and a vertical axis to indicate selected output information (an example of which is designated by reference number 955) related to one of the signals 940A, 940B, 945A, 945B of graph 900A. The selected output information 955 relates to movement of an object, as may be the same or similar to object movement information (e.g., speed and direction of object movement) described above in conjunction with FIG. 7 and FIG. 8.

For example, at time t₂₁, the selected object speed information 955A is related to the signal 940A and at time t₂₄ the selected object speed information 955B is related to signal 945A. Here, during circuit start up or power up, an output signal selector (as may be the same or similar to output selector 250 of circuit 200 of FIG. 2) selects one of the predetermined threshold detector output signals (e.g., the first predetermined threshold detector output signal 940A) to generate speed information and at time t₂₄ selects one of the tracking threshold detector output signal (e.g., the first tracking threshold detector 945A) to generate speed information.

At time t₂₂, the selected object direction information 955C is derived from signals 940A, 940B and at time t₂₃ the selected object direction information 955D is derived from signals 945A, 945B. Here, during circuit start up or power up, the output signal selector selects relative phases of the predetermined threshold detector output signals (e.g., predetermined threshold detector output signals 940A, 940B) to derive direction information and at time t₂₃ selects relative phases of the tracking threshold detector output signals (e.g., the tracking threshold detector signals 945A, 945B) to derive direction information. Time t₂₃ (i.e., a time when output selector 250 of circuit 200 of FIG. 2 switches from using the predetermined threshold detectors 220A, 220B to using the tracking threshold detectors 210A, 210B) may correspond to a predetermined condition including, but not limited to, a calibration time of a circuit and/or a predetermined number of cycles of one of the signals 940A, 940B, 945A, 945B. Triangular icons 977 represent object direction information output by the output signal selector related to the first and second predetermined threshold detector output signals 940A, 940B, and triangular icons 979 represent object direction information output by the output signal selector related to the first and second tracking threshold detector output signals 945A, 945B.

It will be appreciated that, in order to obtain a rapid determination of direction of movement, two predetermined threshold detectors should be used, so that a relative phase can be rapidly determined between the output signals of the two predetermined threshold detectors. However, use of only one predetermined threshold detector as in FIG. 1 can still provide advantages, for example, a more rapid determination of object speed of movement (see, e.g., selected output information 955 beginning at time t₂₁).

While particular numbers of cycles, particular times, and other particular parameters are described above, it will be appreciated that other numbers of cycles, other times, and other particular parameters can be used.

It should be appreciated that a circuit as described herein may be used in applications in which it is desired, needed, or necessary to generate fast speed and/or direction information in sensor applications including, but not limited to, automotive engine management applications.

Having described embodiments of the invention, it will now become apparent to one of ordinary skill in the art that other embodiments incorporating these concepts may be used. It is felt therefore that these embodiments should not be limited to disclosed embodiments, but rather should be limited only by the scope of the appended claims.

## Claims

1. A circuit (200) responsive to movement of an object (224), comprising:
at least three magnetic field sensing elements (204A, 204B, 204C), a first pair (205A) of the at least three magnetic field sensing elements operative to provide a first magnetic field signal (274A, 274B, 294A, 294B) proportional to a magnetic field at a first position associated with the object (224), and a second pair (205B) of the at least three magnetic field sensing elements operative to provide a second magnetic field signal (284A, 284B, 294A, 294B) proportional to the magnetic field at a second position;
a first predetermined threshold detector (220A) comprising:
a comparator (228A) having a first input (278A) responsive to the first magnetic field signal, a second input (278B) responsive to a first fixed reference voltage threshold (230A), and an output (278C) at which is provided a first predetermined threshold detector output signal (240A) having a first predetermined threshold detector phase;
a second predetermined threshold detector (220B) comprising:
a comparator (228B) having a first input (288A) responsive to the second magnetic field signal, a second input (288B) responsive to a second fixed reference voltage threshold (230B), and an output (288C) at which is provided a second predetermined threshold detector output signal (240B) having a second predetermined threshold detector phase;
a first tracking threshold detector (210A) comprising:
a tracking circuit (216A) coupled to receive the first magnetic field signal and configured to track positive and negative peaks of the first magnetic field signal and to generate a first tracking signal (277A); and
a comparator (218A) having a first input (278A) responsive to the first magnetic field signal, a second input (278B) responsive to an input signal related to the tracking signal (277A), and an output (278C) at which is provided a tracking threshold detector output signal (245A); and
a second tracking threshold detector (210B) comprising: a tracking circuit (216B) coupled to receive the second magnetic field signal and configured to track positive and negative peaks of the second magnetic field signal and to generate a second tracking signal (277B); and
a comparator (218B) having a first input (288A) responsive to the second magnetic field signal, a second input (288B) responsive to an input related to the tracking signal (277B), and an output (288C) at which is provided a tracking threshold detector signal (245B); and
an output signal selector (250) having a first input (250A) responsive to the first tracking threshold detector output signal (245A), a second input (250B) responsive to the first predetermined threshold detector output signal (240A), a third input (250C) responsive to the second predetermined threshold detector output signal (240B), and a fourth input (250D) responsive to the second tracking threshold detector output signal (245B), the output signal selector being configured to determine a difference between the first and second predetermined threshold detector phases to obtain a movement direction of the object and to generate a circuit output signal corresponding to the first predetermined threshold detector output signal (240A) and the second predetermined threshold detector output signal (240B), this circuit output signal comprising the movement direction following startup of the circuit;
and after the occurrence of at least one of the following predetermined conditions :
a predetermined number of cycles of the first magnetic field signal, the second magnetic field signal, the first predetermined threshold detector output signal, or the second predetermined threshold detector output signal;
a predetermined time;
a condition of an automatic gain control or an automatic offset adjustment; or
the end of a calibration time period;
the output signal selector (250) is configured to
generate the circuit output signal corresponding to the first tracking threshold detector output signal (245A) and the second threshold detector output signal (245B).

2. The circuit of claim 1, wherein the predetermined condition is related to a predetermined number of cycles of one of the first or second magnetic field signals.

3. The circuit of claim 1, wherein the predetermined condition is related to a predetermined number of cycles of one of the first or second predetermined threshold detector output signals (240A, 240B).

4. The circuit of claim 1, wherein the predetermined condition corresponds to a predetermined time.

5. The circuit of claim 1, further comprising:
at least one of an automatic gain control coupled to one of the first pair (205A) or the second pair (205B) of magnetic field sensing elements and configured to process a corresponding one of the first or second magnetic field signals, wherein the predetermined condition corresponds to a condition of the automatic gain control, or an automatic offset adjustment coupled to one of the first pair or the second pair of magnetic field sensing elements and configured to process a corresponding one of the first or second magnetic field signals, wherein the predetermined condition corresponds to a condition of the automatic gain control.

6. The circuit of claim 1, wherein the tracking threshold detector is a first tracking threshold detector (210A) responsive to the first magnetic field signal and the tracking threshold detector output signal is a first tracking threshold detector output signal (245A) having a frequency indicative of movement speed of the object (224) and a first tracking threshold detector phase, the circuit further comprising:
a second tracking threshold detector (210B) comprising:
a tracking circuit (216B) coupled to receive the second magnetic field signal and configured to track positive and negative peaks of the second magnetic field signal and to generate a second tracking signal (277B); and
a comparator (218B) having a first input (288A) responsive to the second magnetic field signal, a second input (288B) responsive to an input signal related to the second tracking signal (277B), and an output (288C) at which is provided a second tracking threshold detector output signal (245B) having a second tracking threshold detector phase wherein the signal selector (250) further comprises a fourth input (250D) responsive to the second tracking threshold detector output signal (245B), wherein a difference between the first and second tracking threshold detector phases is indicative of a movement direction of the object (224).

7. The circuit of claim 1, wherein at least one of the first or second predetermined threshold detectors (220A, 220B) includes a Schmitt trigger.

8. The circuit of claim 6, wherein the output signal selector (250) is further configured to provide the circuit output signal (255) corresponding to a combination of the first and second tracking threshold detector output signals (245A, 245B) in response to the occurrence of the predetermined condition.

9. A method (600) of detecting a movement of an object (224), comprising:
generating (602) a first magnetic field signal (274A, 274B, 294A, 294B) proportional to a magnetic field associated with the object at a first position;
generating (602) a second magnetic field signal (284A, 284B, 294A, 294B) proportional to a second magnetic field associated with the object at a second position offset from the first position;
generating (604) a first tracking signal (277A) responsive to the first magnetic field signal to track positive and negative peaks of the first magnetic field signal and a second tracking signal (277B) responsive to the second magnetic field signal to track positive and negative peaks of the second magnetic field signal;
generating (606) a first predetermined threshold output signal (240A) responsive to the first magnetic field signal and to a first fixed reference voltage threshold (230A), wherein the first predetermined threshold output signal has a first predetermined threshold output signal phase;
generating (606) a second predetermined threshold output signal (240B) responsive to the second magnetic field signal and to a second fixed reference voltage threshold (230B), wherein the second predetermined threshold output signal has a second predetermined threshold output signal phase, a difference between the first and second predetermined threshold output signal phases being indicative of a movement direction of the object (224);
generating (608) tracking threshold output signals (245A), (245B) responsive to the first and second magnetic field signals and to the tracking signals (277A), (277B) and
determining the difference between the phases of the first predetermined threshold output signal (240A) and the second predetermined threshold output signal (240B) to obtain the movement direction of the object and to generate an overall output signal comprising the movement direction following a startup and to generate the overall output signal corresponding to the tracking threshold output signals (245A), (245B) after the occurrence of at least one of:
a predetermined number of cycles of the first magnetic field signal, the second magnetic field signal, the first predetermined threshold output signal, or the second predetermined threshold output signal;
a predetermined time;
a condition of an automatic gain control or an automatic offset adjustment; or
the end of a calibration time period.

10. The method of claim 9, wherein said tracking signal is a first tracking signal (277A) responsive to the first magnetic field signal, said tracking threshold output signal is a first tracking threshold output signal (245A) responsive to the first magnetic field signal and to the first tracking signal, wherein the first tracking threshold output signal has a frequency indicative of a movement speed of the object and a first tracking threshold output signal phase, the method further comprising:
generating a second tracking signal (277B) responsive to the second magnetic field signal to track positive and negative peaks of the second magnetic field signal;
generating a second tracking threshold output signal (245B) responsive to the second magnetic field signal and to the second tracking signal (277B) and having a second tracking threshold output signal phase, a difference between the first and second tracking threshold output signal phases indicative of a movement direction of the object (224); and
wherein said overall output signal (255) corresponds to a combination of the first and second tracking threshold output signals (245A, 245B) in response to the occurrence of the predetermined condition.

## Patentansprüche

1. Schaltung (200), die auf Bewegungen eines Objekts (224) anspricht, die Folgendes umfasst:
wenigstens drei Magnetfelderfassungselemente (204A, 204B, 204C), wobei ein erstes Paar (205A) der wenigstens drei Magnetfelderfassungselemente die Aufgabe hat, ein erstes Magnetfeldsignal (274A, 274B, 294A, 294B) proportional zu einem Magnetfeld an einer mit dem Objekt (224) assoziierten ersten Position anzulegen, und wobei ein zweites Paar (205B) der wenigstens drei Magnetfelderfassungselemente die Aufgabe hat, ein zweites Magnetfeldsignal (284A, 284B, 294A, 294B) proportional zu dem Magnetfeld an einer zweiten Position anzulegen;
einen ersten vorbestimmten Schwellendetektor (220A), der Folgendes umfasst:
einen Komparator (228A) mit einem ersten Eingang (278A), der auf das erste Magnetfeldsignal anspricht, einem zweiten Eingang (278B), der auf eine erste feste Referenzspannungsschwelle (230A) anspricht, und einem Ausgang (278C), an den ein erstes vorbestimmtes Schwellendetektorausgangssignal (240A) mit einer ersten vorbestimmten Schwellendetektorphase angelegt wird;
einen zweiten vorbestimmten Schwellendetektor (220B), der Folgendes umfasst:
einen Komparator (228B) mit einem ersten Eingang (288A), der auf das zweite Magnetfeldsignal anspricht, einem zweiten Eingang (288B), der auf eine zweite feste Referenzspannungsschwelle (230B) anspricht, und einem Ausgang (288C), an den ein zweites vorbestimmtes Schwellendetektorausgangssignal (240B) mit einer zweiten vorbestimmten Schwellendetektorphase angelegt wird;
einen ersten Verfolgungsschwellendetektor (210A), der Folgendes umfasst:
eine Verfolgungsschaltung (216A), die zum Empfangen des ersten Magnetfeldsignals gekoppelt und zum Verfolgen von positiven und negativen Spitzen des ersten Magnetfeldsignals und zum Erzeugen eines ersten Verfolgungsignals (277A) konfiguriert ist; und
einen Komparator (218A) mit einem ersten Eingang (278A), der auf das erste Magnetfeldsignal anspricht, einem zweiten Eingang (278B), der auf ein Eingangssignal bezogen auf das Verfolgungssignal (277A) anspricht, und einem Ausgang (278C), an den ein Verfolgungsschwellendetektor-Ausgangssignal (245A) angelegt wird; und
einen zweiten Verfolgungsschwellendetektor (210B), der Folgendes umfasst: eine Verfolgungsschaltung (216B), die zum Empfangen des zweiten Magnetfeldsignals gekoppelt und zum Verfolgen von positiven und negativen Spitzen des zweiten Magnetfeldsignals und zum Erzeugen eines zweiten Verfolgungsignals (277B) konfiguriert ist; und
einen Komparator (218B) mit einem ersten Eingang (288A), der auf das zweite Magnetfeldsignal anspricht, einem zweiten Eingang (288B), der auf einen Eingang bezogen auf das Verfolgungssignal (277B) anspricht, und einem Ausgang (288C), an den ein Verfolgungsschwellendetektorsignal (245B) angelegt wird; und
einen Ausgangssignalselektor (250) mit einem ersten Eingang (250A), der auf das erste Verfolgungsschwellendetektor-Ausgangssignal (245A) anspricht, einem zweiten Eingang (250B), der auf das erste vorbestimmte Schwellendetektorausgangssignal (240A) anspricht, einem dritten Eingang (250C), der auf das zweite vorbestimmte Schwellendetektorausgangssignal (240B) anspricht, und einem vierten Eingang (250D), der auf das zweite Verfolgungsschwellendetektor-Ausgangssignal (245B) anspricht, wobei der Ausgangssignalselektor zum Bestimmen einer Differenz zwischen der ersten und der zweiten vorbestimmten Schwellendetektorphase konfiguriert ist, um eine Bewegungsrichtung des Objekts zu erhalten und um ein Schaltungsausgangssignal zu erzeugen, das dem ersten vorbestimmten Schwellendetektorausgangssignal (240A) und dem zweiten vorbestimmten Schwellendetektorausgangssignal (240B) entspricht, wobei dieses Schaltungsausgangssignal die Bewegungsrichtung nach dem Starten der Schaltung umfasst; und
nach dem Auftreten von wenigstens einer der folgenden vorbestimmten Bedingungen:
eine vorbestimmte Anzahl von Zyklen des ersten Magnetfeldsignals, des zweiten Magnetfeldsignals, des ersten vorbestimmten Schwellendetektorausgangssignals oder des zweiten vorbestimmten Schwellendetektorausgangssignals;
eine vorbestimmte Zeit;
eine Bedingung einer automatischen Verstärkungsregelung oder einer automatischen Versatzjustage; oder
das Ende einer Kalibrationszeitperiode;
der Ausgangssignalselektor (250) ist zum Erzeugen des Schaltungsausgangssignals entsprechend dem ersten Verfolgungschwellendetektor-Ausgangssignal (245A) und dem zweiten Schwellendetektorausgangssignal (245B) konfiguriert.

2. Schaltung nach Anspruch 1, wobei sich die vorbestimmte Bedingung auf eine vorbestimmte Anzahl von Zyklen von einem der ersten oder zweiten Magnetfeldsignale bezieht.

3. Schaltung nach Anspruch 1, wobei sich die vorbestimmte Bedingung auf eine vorbestimmte Anzahl von Zyklen von einem der ersten oder zweiten vorbestimmten Schwellendetektorausgangssignale (240A, 240B) bezieht.

4. Schaltung nach Anspruch 1, wobei die vorbestimmte Bedingung einer vorbestimmten Zeit entspricht.

5. Schaltung nach Anspruch 1, die ferner Folgendes umfasst:
wenigstens eines aus einer automatischen Verstärkungsregelung, gekoppelt mit einem aus dem ersten Paar (205A) oder dem zweiten Paar (205B) von Magnetfelderfassungselementen und konfiguriert zum Verarbeiten eines entsprechenden einen der ersten oder zweiten Magnetfeldsignale, wobei die vorbestimmte Bedingung einer Bedingung der automatischen Verstärkungsregelung entspricht, oder einer automatischen Versatzjustage, gekoppelt mit einem aus dem ersten Paar oder dem zweiten Paar Magnetfelderfassungselementen und konfiguriert zum Verarbeiten eines entsprechenden einen der ersten oder zweiten Magnetfeldsignale, wobei die vorbestimmte Bedingung einer Bedingung der automatischen Verstärkungsregelung entspricht.

6. Schaltung nach Anspruch 1, wobei der Verfolgungsschwellendetektor ein erster Verfolgungsschwellendetektor (210A) ist, der auf das erste Magnetfeldsignal anspricht, und das Verfolgungsschwellendetektor-Ausgangssignal ein erstes Verfolgungsschwellendetektor-Ausgangssignal (245A) mit einer Frequenz ist, die eine Bewegungsgeschwindigkeit des Objekts (224) und eine erste Verfolgungsschwellendetektorphase anzeigt, wobei die Schaltung ferner Folgendes umfasst:
einen zweiten Verfolgungsschwellendetektor (210B), der Folgendes umfasst:
eine Verfolgungsschaltung (216B), gekoppelt zum Empfangen des zweiten Magnetfeldsignals und konfiguriert zum Verfolgen von positiven und negativen Spitzen des zweiten Magnetfeldsignals und zum Erzeugen eines zweiten Verfolgungssignals (277B); und
einen Komparator (218B) mit einem ersten Eingang (288A), der auf das zweite Magnetfeldsignal anspricht, einem zweiten Eingang (288B), der auf ein Eingangssignal bezogen auf das zweite Verfolgungssignal (277B) anspricht, und einem Ausgang (288C), an den ein zweites Verfolgungsschwellendetektor-Ausgangssignal (245B) mit einer zweiten Verfolgungsschwellendetektorphase angelegt wird, wobei der Signalselektor (250) ferner einen vierten Eingang (250D) umfasst, der auf das zweite Verfolgungsschwellendetektor-Ausgangssignal (245B) anspricht, wobei eine Differenz zwischen den ersten und zweiten Verfolgungsschwellendetektorphasen eine Bewegungsrichtung des Objekts (224) anzeigt.

7. Schaltung nach Anspruch 1, wobei wenigstens einer der ersten oder zweiten vorbestimmten Schwellendetektoren (220A, 220B) einen Schmitt-Trigger beinhaltet.

8. Schaltung nach Anspruch 6, wobei der Ausgangssignalselektor (250) ferner zum Anlegen des Schaltungsausgangssignals (255) entsprechend einer Kombination von ersten und zweiten Verfolgungsschwellendetector-Ausgangssignalen (245A, 245B) als Reaktion auf das Auftreten der vorbestimmten Bedingung konfiguriert ist.

9. Verfahren (600) zum Erkennen einer Bewegung eines Objekts (224), das Folgendes beinhaltet:
Erzeugen (602) eines ersten Magnetfeldsignals (274A, 274B, 294A, 294B) proportional zu einem mit dem Objekt an einer ersten Position assoziierten Magnetfeld;
Erzeugen (602) eines zweiten Magnetfeldsignals (284A, 284B, 294A, 294B) proportional zu einem mit dem Objekt an einer zweiten Position versetzt von der ersten Position assoziierten zweiten Magnetfeld;
Erzeugen (604) eines ersten Verfolgungssignals (277A), das auf das erste Magnetfeldsignals anspricht, zum Verfolgen von positiven und negativen Spitzen des ersten Magnetfeldsignals, und eines zweiten Verfolgungssignals (277B), das auf das zweite Magnetfeldsignals anspricht, zum Verfolgen von positiven und negativen Spitzen des zweiten Magnetfeldsignals;
Erzeugen (606) eines ersten vorbestimmten Schwellenausgangssignals (240A), das auf das erste Magnetfeldsignal und auf eine erste feste Referenzspannungsschwelle (230A) anspricht, wobei das erste vorbestimmte Schwellenausgangssignal eine erste vorbestimmte Schwellenausgangssignalphase hat;
Erzeugen (606) eines zweiten vorbestimmten Schwellenausgangssignals (240B), das auf das zweite Magnetfeldsignal und auf eine zweite feste Referenzspannungschwelle (230B) anspricht, wobei das zweite vorbestimmte Schwellenausgangssignal eine zweite vorbestimmte Schwellenausgangssignalphase hat, wobei eine Differenz zwischen der ersten und der zweiten vorbestimmten Schwellenausgangssignalphase eine Bewegungsrichtung des Objekts (224) anzeigt;
Erzeugen (608) von Verfolgungsschwellenausgangssignalen (245A), (245B), die auf das erste und das zweite Magnetfeldsignals und auf die Verfolgungssignale (277A), (277B) ansprechen, und
Bestimmen der Differenz zwischen den Phasen des ersten vorbestimmten Schwellenausgangssignals (240A) und des zweiten vorbestimmten Schwellenausgangssignals (240B), um die Bewegungsrichtung des Objekts zu erhalten und um ein Gesamtausgangssignal zu erzeugen, das die Bewegungsrichtung nach einem Starten umfasst, und um das Gesamtausgangssignal zu erzeugen, das den Verfolgungsschwellenausgangssignalen (245A), (245B) nach dem Auftreten von wenigstens einem der Folgenden entspricht:
einer vorbestimmten Anzahl von Zyklen des ersten Magnetfeldsignals, des zweiten Magnetfeldsignals, des ersten vorbestimmten Schwellenausgangssignals oder des zweiten vorbestimmten Schwellenausgangssignals;
einer vorbestimmten Zeit;
einer Bedingung einer automatischen Verstärkungsregelung oder einer automatischen Versatzjustage; oder
dem Ende einer Kalibrationszeitperiode.

10. Verfahren nach Anspruch 9, wobei das genannte Verfolgungssignal ein erstes Verfolgungsignal (277A) ist, das auf das erste Magnetfeldsignal anspricht, das genannte Verfolgungsschwellenausgangssignal ein erstes Verfolgungsschwellenausgangssignal (245A) ist, das auf das erste Magnetfeldsignal und auf das erste Verfolgungssignal anspricht, wobei das erste Verfolgungsschwellenausgangssignal eine Frequenz hat, die eine Bewegungsgeschwindigkeit des Objekts und eine erste Verfolgungsschwellenausgangssignalphase anzeigt, wobei das Verfahren ferner Folgendes beinhaltet:
Erzeugen eines zweiten Verfolgungssignals (277B), das auf das zweite Magnetfeldsignal anspricht, um positive und negative Spitzen des zweiten Magnetfeldsignals zu verfolgen;
Erzeugen eines zweiten Verfolgungsschwellenausgangssignals (245B), das auf das zweite Magnetfeldsignal und auf das zweite Verfolgungssignal (277B) anspricht und eine zweite Verfolgungsschwellenausgangssignalphase hat, wobei eine Differenz zwischen der ersten und der zweiten Verfolgungsschwellenausgangssignalphase eine Bewegungsrichtung des Objekts (224) anzeigt; und
wobei das genannte Gesamtausgangssignal (255) einer Kombination des ersten und des zweiten Verfolgungsschwellenausgangssignals (245A, 245B) als Reaktion auf das Auftreten der vorbestimmten Bedingung entspricht.

## Revendications

1. Circuit (200) réagissant au mouvement d'un objet (224), comprenant :
au moins trois éléments détecteurs de champ magnétique (204A, 204B, 204C), une première paire (205A) desdits au moins trois éléments détecteurs de champ magnétique opérant pour fournir un premier signal de champ magnétique (274A, 274B, 294A, 294B) proportionnel à un champ magnétique dans une première position associée à l'objet (224), et une deuxième paire (205B) desdits au moins trois éléments détecteurs de champ magnétique opérant pour fournir un deuxième signal de champ magnétique (284A, 284B, 294A, 294B) proportionnel au champ magnétique dans une deuxième position ;
un premier détecteur de seuil prédéterminé (220A) comprenant :
un comparateur (228A) ayant une première entrée (278A) qui réagit au premier signal de champ magnétique, une deuxième entrée (278B) qui réagit à un premier seuil de tension de référence fixe (230A), et une sortie (278C) au niveau de laquelle est fourni un premier signal de sortie de détecteur de seuil prédéterminé (240A) ayant une première phase de détecteur de seuil prédéterminé ;
un deuxième détecteur de seuil prédéterminé (220B) comprenant :
un comparateur (228B) ayant une première entrée (288A) qui réagit au deuxième signal de champ magnétique, une deuxième entrée (288B) qui réagit à un deuxième seuil de tension de référence fixe (230B), et une sortie (288C) au niveau de laquelle est fourni un deuxième signal de sortie de détecteur de seuil prédéterminé (240B) ayant une deuxième phase de détecteur de seuil prédéterminé ;
un premier détecteur de seuil suiveur (210A) comprenant :
un circuit suiveur (216A) couplé pour recevoir le premier signal de champ magnétique et configuré pour suivre les pics positifs et négatifs du premier signal de champ magnétique et pour générer un premier signal de poursuite (277A) ; et
un comparateur (218A) ayant une première entrée (278A) qui réagit au premier signal de champ magnétique, une deuxième entrée (278B) qui réagit à un signal d'entrée lié au signal de poursuite (277A), et une sortie (278C) au niveau de laquelle est fourni un signal de sortie de détecteur de seuil suiveur (245A) ; et
un deuxième détecteur de seuil suiveur (210B) comprenant :
un circuit suiveur (216B) couplé pour recevoir le deuxième signal de champ magnétique et configuré pour suivre les pics positifs et négatifs du deuxième signal de champ magnétique et pour générer un deuxième signal de poursuite (277B) ; et
un comparateur (218B) ayant une première entrée (288A) qui réagit au deuxième signal de champ magnétique, une deuxième entrée (288B) qui réagit à une entrée liée au signal de poursuite (277B), et une sortie (288C) au niveau de laquelle est fourni un signal de détecteur de seuil suiveur (245B) ; et
un sélecteur de signal de sortie (250) ayant une première entrée (250A) qui réagit au premier signal de sortie de détecteur de seuil suiveur (245A), une deuxième entrée (250B) qui réagit au premier signal de sortie de détecteur de seuil prédéterminé (240A), une troisième entrée (250C) qui réagit au deuxième signal de sortie de détecteur de seuil prédéterminé (240B), et une quatrième entrée (250D) qui réagit au deuxième signal de sortie de détecteur de seuil suiveur (245B), le sélecteur de signal de sortie étant configuré pour déterminer une différence entre la première et la deuxième phase de détecteur de seuil prédéterminé afin d'obtenir une direction de mouvement de l'objet et pour générer un signal de sortie de circuit correspondant au premier signal de sortie de détecteur de seuil prédéterminé (240A) et au deuxième signal de sortie de détecteur de seuil prédéterminé (240B), ce signal de sortie de circuit comprenant la direction de mouvement consécutive au démarrage du circuit ; et
après la réalisation de l'une au moins des conditions prédéterminées suivantes :
un nombre prédéterminé de cycles du premier signal de champ magnétique, du deuxième signal de champ magnétique, du premier signal de sortie de détecteur de seuil prédéterminé ou du deuxième signal de sortie de détecteur de seuil prédéterminé ;
une durée prédéterminée ;
une condition d'une commande automatique de gain ou d'un réglage automatique de décalage ; ou
la fin d'une période d'étalonnage ;
le sélecteur de signal de sortie (250) est configuré pour générer le signal de sortie de circuit correspondant au premier signal de sortie de détecteur de seuil suiveur (245A) et au deuxième signal de sortie de détecteur de seuil (245B).

2. Circuit selon la revendication 1, dans lequel la condition prédéterminée est liée à un nombre prédéterminé de cycles de l'un des premier ou deuxième signaux de champ magnétique.

3. Circuit selon la revendication 1, dans lequel la condition prédéterminée est liée à un nombre prédéterminé de cycles de l'un des premier ou deuxième signaux de sortie de détecteur de seuil prédéterminé (240A, 240B).

4. Circuit selon la revendication 1, dans lequel la condition prédéterminée correspond à une durée prédéterminée.

5. Circuit selon la revendication 1, comprenant en outre :
l'un au moins parmi une commande automatique de gain couplée à l'une de la première paire (205A) ou de la deuxième paire (205B) d'éléments détecteurs de champ magnétique et configurée pour traiter un signal correspondant parmi le premier ou le deuxième signal de champ magnétique, dans lequel la condition prédéterminée correspond à une condition de la commande automatique de gain, ou un réglage automatique de décalage couplé à l'une de la première paire ou de la deuxième paire d'éléments détecteurs de champ magnétique et configuré pour traiter un signal correspondant parmi le premier ou le deuxième signal de champ magnétique, dans lequel la condition prédéterminée correspond à une condition de la commande automatique de gain.

6. Circuit selon la revendication 1, dans lequel le détecteur de seuil suiveur est un premier détecteur de seuil suiveur (210A) qui réagit au premier signal de champ magnétique et le signal de sortie de détecteur de seuil suiveur est un premier signal de sortie de détecteur de seuil suiveur (245A) ayant une fréquence indicative de la vitesse de mouvement de l'objet (224) et une première phase de détecteur de seuil suiveur, le circuit comprenant en outre :
un deuxième détecteur de seuil suiveur (210B) comprenant :
un circuit suiveur (216B) couplé pour recevoir le deuxième signal de champ magnétique et configuré pour suivre les pics positifs et négatifs du deuxième signal de champ magnétique et pour générer un deuxième signal de poursuite (277B) ; et
un comparateur (218B) ayant une première entrée (288A) qui réagit au deuxième signal de champ magnétique, une deuxième entrée (288B) qui réagit à un signal d'entrée lié au deuxième signal de poursuite (277B), et une sortie (288C) au niveau de laquelle est fourni un deuxième signal de sortie de détecteur de seuil suiveur (245B) ayant une deuxième phase de détecteur de seuil suiveur, dans lequel le signal sélecteur (250) comprend en outre une quatrième entrée (250D) qui réagit au deuxième signal de sortie de détecteur de seuil suiveur (245B), dans lequel une différence entre les première et deuxième phases de détecteur de seuil suiveur est indicative d'une direction de mouvement de l'objet (224).

7. Circuit selon la revendication 1, dans lequel l'un au moins des premier ou deuxième détecteurs de seuil prédéterminé (220A, 220B) comporte une bascule de Schmitt.

8. Circuit selon la revendication 6, dans lequel le sélecteur de signal de sortie (250) est en outre configuré pour fournir le signal de sortie de circuit (255) correspondant à une combinaison des premier et deuxième signaux de sortie de détecteur de seuil suiveur (245A, 245B) en réponse à la réalisation de la condition prédéterminée.

9. Procédé (600) de détection d'un mouvement d'un objet (224), comprenant les étapes consistant à :
générer (602) un premier signal de champ magnétique (274A, 274B, 294A, 294B) proportionnel à un champ magnétique associé à l'objet dans une première position ;
générer (602) un deuxième signal de champ magnétique (284A, 284B, 294A, 294B) proportionnel à un deuxième champ magnétique associé à l'objet dans une deuxième position décalée par rapport à la première position ;
générer (604) un premier signal de poursuite (277A) qui réagit au premier signal de champ magnétique pour suivre les pics positifs et négatifs du premier signal de champ magnétique et un deuxième signal de poursuite (277B) qui réagit au deuxième signal de champ magnétique pour suivre les pics positifs et négatifs du deuxième signal de champ magnétique ;
générer (606) un premier signal de sortie de seuil prédéterminé (240A) qui réagit au premier signal de champ magnétique et à un premier seuil de tension de référence fixe (230A), dans lequel le premier signal de sortie de seuil prédéterminé a une première phase de signal de sortie de seuil prédéterminé ;
générer (606) un deuxième signal de sortie de seuil prédéterminé (240B) qui réagit au deuxième signal de champ magnétique et à un deuxième seuil de tension de référence fixe (230B), dans lequel le deuxième signal de sortie de seuil prédéterminé a une deuxième phase de signal de sortie de seuil prédéterminé, une différence entre les première et deuxième phases de signal de sortie de seuil prédéterminé étant indicative d'une direction de mouvement de l'objet (224) ;
générer (608) des signaux de sortie de poursuite de seuil (245A), (245B) qui réagissent aux premier et deuxième signaux de champ magnétique et aux signaux de poursuite (277A), (277B) et
déterminer la différence entre les phases du premier signal de sortie de seuil prédéterminé (240A) et du deuxième signal de sortie de seuil prédéterminé (240B) pour obtenir la direction de mouvement de l'objet et pour générer un signal de sortie global comprenant la direction de mouvement consécutive à un démarrage et pour générer le signal de sortie global correspondant aux signaux de sortie de poursuite de seuil (245A), (245B) après la réalisation de l'une au moins des conditions suivantes :
un nombre prédéterminé de cycles du premier signal de champ magnétique, du deuxième signal de champ magnétique, du premier signal de sortie de seuil prédéterminé ou du deuxième signal de sortie de seuil prédéterminé ;
une durée prédéterminée ;
une condition d'une commande automatique de gain ou d'un réglage automatique de décalage ; ou
la fin d'une période d'étalonnage.

10. Procédé selon la revendication 9, dans lequel ledit signal de poursuite est un premier signal de poursuite (277A) qui réagit au premier signal de champ magnétique, ledit signal de sortie de poursuite de seuil est un premier signal de sortie de poursuite de seuil (245A) qui réagit au premier signal de champ magnétique et au premier signal de poursuite, dans lequel le premier signal de sortie de poursuite de seuil a une fréquence indicative d'une vitesse de mouvement de l'objet et une première phase de signal de sortie de poursuite de seuil, le procédé comprenant en outre les étapes consistant à :
générer un deuxième signal de poursuite (277B) qui réagit au deuxième signal de champ magnétique pour suivre les pics positifs et négatifs du deuxième signal de champ magnétique ;
générer un deuxième signal de sortie de poursuite de seuil (245B) qui réagit au deuxième signal de champ magnétique et au deuxième signal de poursuite (277B) et qui a une deuxième phase de signal de sortie de poursuite de seuil, une différence entre les première et deuxième phases de signal de sortie de poursuite de seuil étant indicative d'une direction de mouvement de l'objet (224) ; et
dans lequel ledit signal de sortie global (255) correspond à une combinaison des premier et deuxième signaux de sortie de poursuite de seuil (245A, 245B) en réponse à la réalisation de la condition prédéterminée.
